# EUROPÄISCHE PATENTSCHRIFT

(11) **EP 2 804 407 B1**
(45) Veröffentlichungstag und Bekanntmachung des Hinweises auf die Patenterteilung: **26.07.2017**
(21) Anmeldenummer: 14165451.7
(22) Anmeldetag: 22.04.2014
(51) Int. Cl.: H04W 4/22

(54) **Verfahren und System zur Übertragung einer textbasierten Notrufnachricht mittels eines mobilen Telekommunikationsendgeräts und eines Mobilfunkkommunikationsnetzes, System, Computerprogramm und Computerprogrammprodukt**
Method and system for transmitting a text-based emergency call message by means of a mobile telecommunications terminal and a mobile radio communication network, system, computer program and a computer program product
Procédé et système de transfert d'un message d'appel d'urgence textuel au moyen d'un appareil émetteur de télécommunication et un réseau de radiocommunication mobile, système, programme informatique et produit de programme informatique

(30) Priorität: 14.05.2013 DE 102013008133
(43) Veröffentlichungstag der Anmeldung: 19.11.2014
(73) Patentinhaber: Deutsche Telekom AG, 53113 Bonn (DE)
(72) Erfinder: Kramarz-Von Kohout, Gerhard, 53113 Bonn (DE)
(74) Vertreter: Schwöbel, Thilo K.

(56) Entgegenhaltungen:
- WO-A2-2006/062915
- US-A1- 2009 156 237
- US-A1- 2011 009 086

## Beschreibung

### Stand der Technik

Die Erfindung betrifft ein Verfahren zur Übertragung einer textbasierten Notrufnachricht mittels eines mobilen Telekommunikationsendgeräts und eines Mobilfunkkommunikationsnetzes.

Die Erfindung betrifft ferner ein System zur Übertragung einer textbasierten Notrufnachricht mittels eines mobilen Telekommunikationsendgeräts und eines Mobilfunkkommunikationsnetzes.

Verfahren zur Versendung von Notrufnachrichten, wobei die Notrufnachricht als eine Facsimile-Nachricht einer Notrufabfragestelle - der Begriff Notrufabfragestelle wird nachfolgend synonym mit PSAP (Public Safety Answering Point) verwendet - einer Mehrzahl von Notrufabfragestellen eines in einem Gesamtgebiet eingerichteten Notrufdienstes zugeleitet wird, sind allgemein bekannt.

Gegenüber der Facsimile-Nachricht haben andere Nachrichtentypen, wie insbesondere die E-Mail-Nachrichten oder auch die SMS-Nachrichten (Short Message Service Nachrichten bzw. Kurznachrichtendienst) jedoch mittlerweile in heutigen Kommunikationsnetzen eine besonders hohe Bedeutung erlangt, insbesondere auch weil sie zumindest teilweise auf der Grundlage des Internetprotokolls besonders einfach in Computernetzwerken übertragen werden können.

In verschiedenen Rechtsordnungen ist es vorgesehen bzw. gefordert - beispielhaft sei insbesondere die deutsche Rechtsordnung, bestehend aus § 108 des Telekommunikationsgesetzes (TKG), Verordnung über Notrufverbindungen (NotrufV) und Technische Richtlinie Notrufverbindungen (TR Notruf), genannt -, dass Notrufe sowohl mittels einer Sprachverbindung als auch mittels einer Facsimile-Verbindung bzw. einer Faxverbindung von einem den Notruf absetzenden bzw. den Notruf sendenden Benutzer bzw. Teilnehmer generiert werden können bzw. dass technisch die Möglichkeit hierzu gegeben sein muss. Eine Notrufabfragestelle kann daher üblicherweise Notrufe nur als Sprach- oder Facsimile-Verbindungen entgegennehmen.

Die Möglichkeit der Facsimile-Verbindung gestattet es hierbei insbesondere denjenigen Personen, die des Sprechens und Hörens nicht oder nur eingeschränkt mächtig sind, ebenfalls einen Notruf abzusetzen.

Die deutschen Mobilfunknetze der zweiten Generation verfügen über eine zellbasierte Routing-Funktionalität einer an eine bundesweit einheitliche Notrufnummer (die Rufnummern "110" (für Polizeinotruf) oder "112" (für Feuerwehrnotruf)) adressierten Facsimile-Nachricht zur lokal zuständigen Notrufabfragestelle (d.h. jeder Funkzelle des zellulären Mobilfunknetzes ist eine lokal (für diese Funkzelle) zuständige Notrufabfragestelle zugeordnet, die Facsimile-Nachricht wird der zuständigen Notrufabfragestelle zugeleitet). Mobilfunknetze der höheren Generationen verfügen in der Regel nicht über eine Facsimile-Funktionalität. Von daher entfällt in diesen Netzen insbesondere die Möglichkeit, eine Notrufverbindung als Facsimile-Verbindung aufzubauen

Darüber hinaus sind Dienste bekannt, die eine Umwandlungs-Funktionalität einer an eine geografische Facsimile-Rufnummer (vollständige E.164-Rufnummer) adressierte Textnachricht in eine Facsimile-Nachricht an diese Facsimile-Rufnummer, beispielsweise mittels eines Dienstes "SMS2Fax", bereitstellen.

Weiterhin sind Lösungen bekannt für das Versenden einer Facsimile-Nachricht via E-Mail, wobei der Text der E-Mail-Nachricht die gewünschte (eindeutig definierte) geografische Facsimile-Rufnummer (vollständige E.164-Rufnummer) umfassen muss. Ein Beispiel hierfür ist etwa ein Dienst, der unter "www.sms4.de" verfügbar ist.

Die Benutzung dieser Funktionalitäten, nämlich das Versenden einer Facsimile-Nachricht, ist in Mobilfunknetzen der zweiten Generation (insbesondere GSM-Mobilfunknetzen, Global System for Mobile Communication) zwar technisch spezifiziert und standardisiert, jedoch sind zum einen kaum für die Versendung von Facsimile-Nachrichten geeignete Endgeräte auf dem Markt und zum anderen ist die Versendung von Facsimile-Nachrichten mittels solcher Geräte nicht weit verbreitet. Diejenigen solcher Geräte, die tatsächlich angeboten werden, sind zumeist teuer, klobig und ausschließlich für die Versendung von Facsimile-Nachrichten gemäß dem GSM-Standard vorgesehen, d.h. nicht zur Versendung von anderen Arten von Nachrichten ausgelegt.

Das Versenden einer an eine Notrufnummer adressierten Facsimile-Nachricht zur lokal zuständigen Notrufabfragestelle ist daher gerade für einen Notrufenden, der auf eine barrierefreie Nutzung angewiesen ist, in der Praxis bisher nicht zufriedenstellend möglich.

Die Dokumente US2011009086, US2009156237, WO2006062915 offenbaren bekannte Systeme zur Übertragung von textbasierten Notrufnachrichten in homogenen Leitstellenumgebungen mit der Möglichkeit der Formatkonvertierung.

### Offenbarung der Erfindung

Der Erfindung liegt die Aufgabe zugrunde, ein Verfahren und ein System zur Bereitstellung einer einfachen und kostengünstigen Lösung für den Zugang zum Notruf, insbesondere einen barrierefreien Zugang, mittels Erstellung einer textbasierten Notrufnachricht unter Nutzung der üblichen Mobilfunknetze, unter Nutzung gängiger Telekommunikationsendgeräte und unter Zustellung der Notrufnachricht in Form einer notrufabfragestellenspezifischen Textnachricht, beispielsweise Facsimile-Nachricht, an die Notrufabfragestelle bereitzustellen, wobei der Notrufende einen oder mehrere gängige Nachrichtendienste nutzen können soll, um eine Notrufnachricht zu erstellen und zu senden, ohne auf das Erstellen und Senden einer notrufabfragestellenspezifischen Textnachricht, insbesondere Facsimile-Nachricht, angewiesen zu sein.

Diese Aufgabe wird erfindungsgemäß gelöst durch ein Verfahren zur Übertragung einer textbasierten Notrufnachricht mittels eines mobilen Telekommunikationsendgeräts und eines Mobilfunkkommunikationsnetzes, wobei die textbasierte Notrufnachricht
-- eine E-Mail-Nachricht, oder
-- eine SMS-Nachricht (Short Message Service), oder
-- eine MMS-Nachricht (Multimedia Messaging Service), oder
-- eine RCS-Nachricht (Rich Communication Suite)
-- eine Nachricht eines IP-basierten Messaging-Dienstes
ist, wobei wenigstens ein für ein eine Mehrzahl von Teilgebieten umfassendes Gesamtgebiet eingerichteter Notrufdienst eine Mehrzahl von Notrufabfragestellen aufweist, wobei jeweils eine lokal zuständige Notrufabfragestelle der Mehrzahl von Notrufabfragestellen einem bestimmten Teilgebiet der Mehrzahl von Teilgebieten zugeordnet ist, wobei die Notrufnachricht als eine notrufabfragestellenspezifische Textnachricht den Notrufabfragestellen zugeleitet wird, wobei ein jeweils eigenes Kommunikationsprofil jeder der lokal zuständigen Notrufabfragestellen zugeordnet ist, wobei die Notrufnachricht in die notrufabfragestellenspezifische Textnachricht gewandelt wird, nachdem die textbasierte Notrufnachricht vom Telekommunikationsendgerät generiert und an das Mobilfunkkommunikationsnetz oder über das Mobilfunkkommunikationsnetz an eine geeignete Servereinrichtung zur Verarbeitung der textbasierten Notrufnachricht übertragen wurde, wobei im Fall einer zu sendenden Notrufnachricht
-- in einem ersten Verfahrensschritt in Abhängigkeit der momentanen räumlichen Zuordnung des Telekommunikationsendgeräts zu einem Teilgebiet der Mehrzahl von Teilgebieten die lokal zuständige Notrufabfragestelle der Mehrzahl von Notrufabfragestellen ermittelt wird,
-- in einem dem ersten Verfahrensschritt nachfolgenden zweiten Verfahrensschritt das Kommunikationsprofil der im ersten Verfahrensschritt ermittelten lokal zuständigen Notrufabfragestelle der Mehrzahl von Notrufabfragestellen ermittelt wird und
-- in einem dem zweiten Verfahrensschritt nachfolgenden dritten Verfahrensschritt die zu sendende Notrufnachricht als notrufabfragestellenspezifische Textnachricht an die lokal zuständige Notrufabfragestelle der Mehrzahl von Notrufabfragestellenunter Verwendung des im zweiten Verfahrensschritt ermittelten Kommunikationsprofils der lokal zuständigen Notrufabfragestelle übertragen wird, oder
-- in einem dem zweiten Verfahrensschritt nachfolgenden alternativen dritten Verfahrensschritt die zu sendende Notrufnachricht als notrufabfragestellenspezifische Textnachricht an ein der lokal zuständigen Notrufabfragestelle der Mehrzahl von Notrufabfragestellen zugeordnetes elektronisches Postfach der Servereinrichtung oder eines anderen Servers unter Verwendung des im zweiten Verfahrensschritt ermittelten Kommunikationsprofils der lokal zuständigen Notrufabfragestelle übertragen wird.

Das Kommunikationsprofil der Notrufabfragestelle kann insbesondere abhängen vom Typ des zugrundeliegenden Kommunikationsnetzanschlusses (z.B. ISDN-, IP-Festnetz-, Mobilfunknetz-Anschluss) und den jeweils unterstützten Nachrichtenformaten bzw. Verbindungsarten (z.B. Sprachverbindung, Faxverbindung, E-Mail).

Es ist dadurch gemäß der vorliegenden Erfindung in vorteilhafter Weise möglich, dass es mit gängigen Telekommunikationsendgeräten möglich ist, textbasiert einen Notruf via Mobilfunk abzusetzen, der zu der zuständigen, insbesondere lokal zuständigen, Notrufabfragestelle geroutet wird. Alternativ wird die zu sendende Notrufnachricht zu dem der Notrufabfragestelle zugeordneten elektronischen Postfach geroutet, so dass die Notrufabfragestelle auf das elektronische Postfach über eine Webschnittstelle (d.h. über ein Web-Interface) oder andere IP-basierte Zugriffsmöglichkeiten (z.B. Abruf von E-Mails) zugreifen kann. Hierdurch ist es gemäß der vorliegenden Erfindung vorteilhaft möglich, dass eine praktikable Lösung zur Absetzung von Notrufen mit gängigen Telekommunikationsendgeräten bereitgestellt wird, die die Versendung von textbasierten Notrufnachrichten gestattet und die Zustellung einer notrufabfragestellenspezifischen Textnachricht bei der lokal zuständigen Notrufabfragestelle sicherstellt. Eine solche Funktionalität kann erfindungsgemäß auf der Basis von gängigen Telekommunikationsendgeräten beispielsweise - im Fall von programmierbaren Telekommunikationsendgeräten, insbesondere sogenannten intelligenten Telefonen (Smartphones) - mit einer Applikation (sogenannte App) oder aber mittels dezidierter Notruf-Telekommunikationsendgeräte sowie mit einer Serverapplikation realisiert werden. Weiterhin ist es erfindungsgemäß vorteilhaft möglich, dass mittels Erstellung einer textbasierten Notrufnachricht unter Nutzung gängiger Telekommunikationsendgeräte - insbesondere in einem an das Telekommunikationsgerät angepassten Nachrichtenformat der Notrufnachricht (endgerätspezifische Textnachricht) - unter Nutzung der üblichen Mobilfunknetze, und unter Zustellung der Notrufnachricht in Form einer Textnachricht an die zuständige Notrufabfragestelle - insbesondere in einem an das Kommunikationsprofil der Notrufabfragestelle angepassten Nachrichten- und Übertragungsformat (notrufabfragestellenspezifische Textnachricht) - bereitzustellen. Insbesondere ist es hierdurch erfindungsgemäß vorteilhaft möglich, dass der Notrufende einen oder mehrere gängige Nachrichtendienste nutzen kann, um eine Notrufnachricht zu erstellen und zu senden, ohne das Kommunikationsprofil der zuständigen Notrufabfragestelle zu kennen. Insbesondere wird gemäß der vorliegenden Erfindung ein Verfahren und System zur Übertragung einer textbasierten Notrufnachricht mittels eines mobilen Telekommunikationsendgeräts in einer heterogenen Leitstellenumgebung (PSAP Umgebung - Public-Safety Answering Point Umgebung) realisiert. Der Begriff "heterogene Leitstellenumgebung" bezieht sich insbesondere auf eine Mehrzahl von Notrufabfragestellen, welche unterschiedliche Kommunikationsprofile aufweisen können.

Insbesondere ist es erfindungsgemäß vorgesehen, dass unterschiedliche Notrufabfragestellen über unterschiedliche Kommunikationsprofile verfügen - d.h. insbesondere, dass zum einen eine Notrufabfragestelle nur den Empfang von Facsimile-Nachrichten unterstützt, eine weitere Notrufabfragestelle nur den Empfang von E-Mail Nachrichten unterstützt und/oder eine andere Notrufabfragestelle eine Kombination mehrerer Kommunikationsarten (z.B. Fax und SMS) unterstützt und zum anderen eine Notrufabfragestelle über einen Telekommunikationsanschluss auf ISDN-Basis und/oder eine andere Notrufabfragestelle über einen Telekommunikationsanschluss auf IP-Basis verfügen.

Erfindungsgemäß ist es bevorzugt vorgesehen, dass das der lokal zuständigen Notrufabfragestellen zugeordnete Kommunikationsprofil eine Adressinformation der lokal zuständigen Notrufabfragestelle umfasst oder ist, wobei die Adressinformation eine Facsimile-Rufnummer, eine Adresse des elektronischen Postfachs und/oder eine weitere Adresse zum eindeutigen Adressieren der lokal zuständigen Notrufabfragestelle umfasst oder ist, wobei insbesondere die notrufabfragestellenspezifische Textnachricht eine Facsimile-Nachricht ist.

Hierdurch ist es vorteilhaft möglich, die textbasierte Notrufnachricht an die jeweils lokal zuständige Notrufabfragestelle in einem der Notrufabfragestelle angepassten Format zu übermitteln.

Erfindungsgemäß bevorzugt ist die lokal zuständige Notrufabfragestelle zum Empfang der notrufabfragestellenspezifischen Textnachricht - beispielsweise von Facsimile (Fax)-Nachrichten, E-Mail Nachrichten, Instant Messaging Nachrichten und/oder sonstige, insbesondere auf Internet Protokoll (IP)- Nachrichtenverbindungen basierende, Textnachrichten - konfiguriert. Weiterhin bevorzugt weist die Servereinrichtung, das elektronische Postfach auf, so dass insbesondere ein webbasierter Zugriffs auf die Servereinrichtung, welche die notrufabfragestellenspezifische Textnachricht und/oder weitere Informationen zu einem Notruf speichern, ermöglicht wird.

Erfindungsgemäß ist es vorgesehen, dass die textbasierte Notrufnachricht entweder in Form einer E-Mail-Nachricht oder einer SMS-Nachricht (Short Message Service) oder einer MMS-Nachricht (Multimedia Messaging Service) oder einer RCS-Nachricht (Rich Communication Suite) oder einer Nachricht eines IP-basierten Messaging-Dienstes (z.B. WhatsApp, iMessage) vom Telekommunikationsendgerät in Abhängigkeit des Messaging-Dienstes (bzw. Nachrichtendienst) zum Mobilfunkkommunikationsnetz bzw. zu einer geeigneten Servereinrichtung des jeweiligen Nachrichtendienstes gesendet wird.

Erfindungsgemäß ist es bevorzugt vorgesehen, dass die Notrufnachricht in die notrufabfragestellenspezifische Textnachricht gewandelt wird, bevor die notrufabfragestellenspezifische Textnachricht an die lokal zuständige Notrufabfragestelle oder in durch die Notrufabfragestelle abrufbaren Format in dem zugeordnete elektronischen Postfach gespeichert wird.

Erfindungsgemäß ist es bevorzugt vorgesehen, dass die Servereinrichtung das elektronische Postfach und eine Webschnittstelle umfasst, wobei in dem alternativen dritten Verfahrensschritt
-- eine Push-Nachricht an die Notrufabfragestelle gesendet wird, wenn die notrufabfragestellenspezifischen Textnachricht an das elektronische Postfach übertragen wird, und/oder
-- durch die Notrufabfragestelle auf das elektronische Postfach über die Webschnittstelle zugegriffen werden kann.

Hierdurch ist es vorteilhaft möglich, die Notrufnachricht zum Abruf über die Webschnittstelle bereitzustellen und/oder die Notrufabfragestelle über den Eingang der Notrufnachricht per Push-Nachricht zu informieren, wobei durch die Push-Nachricht der Notrufabfragestelle der Hinweis gegeben wird, den Zugriff via Web-Interface zu nutzen oder zu aktivieren.

Erfindungsgemäß ist es bevorzugt vorgesehen, dass durch die lokal zuständige Notrufabfragestelle der Mehrzahl von Notrufabfragestellen in Abhängigkeit eines Empfangs der notrufabfragestellenspezifischen Textnachricht geeignete Antwortsignale, insbesondere unter Verwendung des Doppelton-Mehrfrequenz Verfahrens (DTMF - Dual-Tone Multi-Frequency), an die Umwandlungseinrichtung des Mobilfunkkommunikationsnetzes gesendet wird, wobei insbesondere
-- durch die Umwandlungseinrichtung das jeweilige Antwortsignal in eine endgerätespezifische Textnachricht umgewandelt und diese an das Telekommunikationsendgerät übertragen wird, oder -- das jeweilige Antwortsignal an das Telekommunikationsendgerät übertragen wird und durch das Telekommunikationsendgerät in die endgerätespezifische Textnachricht umgewandelt wird.

Hierdurch ist es vorteilhaft möglich, dass mittels eines geeigneten Antwortsignales (z.B. *10*#) eine Bestätigung über den Eingang des Notrufs an einen den Notruf absetzenden bzw. den Notruf sendenden Benutzer bzw. Teilnehmer schnell und effizient übertragen wird. Weiterhin ist es auf diese Weise möglich, einen Dialog zwischen beiden Parteien aufzubauen. So kann die Notrufabfragestelle bei Bedarf mittels eines weiteren Antwortsignales (z.B. *11*#) zusätzliche Informationen vom Notruf sendenden Teilnehmer erbitten, wobei wiederum das entsprechende Antwortsignal in eine entsprechende Textnachnachricht umgewandelt wird. Hierauf kann der Notruf sendende Teilnehmer wiederum eine geeignete textbasierte Notrufnachricht als Antwort erstellen und absenden.

Alternativ oder kumulativ wird diese Aufgabe gelöst durch ein Verfahren zur Übertragung einer textbasierten Notrufnachricht mittels eines mobilen Telekommunikationsendgeräts und eines Mobilfunkkommunikationsnetzes, wobei die textbasierte Notrufnachricht
-- eine E-Mail-Nachricht oder
-- eine SMS-Nachricht (Short Message Service) oder
-- eine MMS-Nachricht (Multimedia Messaging Service) oder
-- eine RCS-Nachricht (Rich Communication Suite) oder
-- eine Nachricht eines Internetprotokoll (IP) -basierten Messaging-Dienstes (z.B. WhatsApp, iMessage)
   ist, wobei wenigstens ein für ein eine Mehrzahl von Teilgebieten umfassendes Gesamtgebiet eingerichteter Notrufdienst eine Mehrzahl von Notrufabfragestellen aufweist, wobei jeweils eine lokal zuständige Notrufabfragestelle der Mehrzahl von Notrufabfragestellen einem bestimmten Teilgebiet der Mehrzahl von Teilgebieten zugeordnet ist, wobei die Notrufnachricht als eine Facsimile-Nachricht den Notrufabfragestellen zugeleitet wird, wobei eine jeweils unterschiedliche Facsimile-Telefonnummer jeder der lokal zuständigen Notrufabfragestellen zugeordnet ist, wobei die Notrufnachricht in die Facsimile-Nachricht gewandelt wird, nachdem die textbasierte Notrufnachricht vom Telekommunikationsendgerät generiert und (insbesondere in Abhängigkeit vom jeweiligen Nachrichtendienst, d.h. in Abhängigkeit davon, ob es sich bei der textbasierten Notrufnachricht um eine SMS-, MMS-bzw. RCS-Nachricht handelt oder ob es sich bei der textbasierten Notrufnachricht um eine E-Mail- bzw. IP-basierte Nachricht handelt) an das Mobilfunkkommunikationsnetz oder an eine geeignete Servereinrichtung zur Verarbeitung der textbasierten Notrufnachricht übertragen wurde, wobei im Fall einer zu sendenden Notrufnachricht
-- in einem ersten Verfahrensschritt in Abhängigkeit der momentanen räumlichen Zuordnung des Telekommunikationsendgeräts zu einem Teilgebiet der Mehrzahl von Teilgebieten die lokal zuständige Notrufabfragestelle der Mehrzahl von Notrufabfragestellen ermittelt wird,
-- in einem dem ersten Verfahrensschritt nachfolgenden zweiten Verfahrensschritt die zugeordnete Facsimile-Rufnummer der im ersten Verfahrensschritt ermittelten lokal zuständigen Notrufabfragestelle der Mehrzahl von Notrufabfragestellen ermittelt wird und
-- in einem dem zweiten Verfahrensschritt nachfolgenden dritten Verfahrensschritt die zu sendende Notrufnachricht als Facsimile-Nachricht an die lokal zuständige Notrufabfragestelle der Mehrzahl von Notrufabfragestellen unter Verwendung der im zweiten Verfahrensschritt ermittelten Facsimile-Rufnummer der lokal zuständigen Notrufabfragestelle übertragen wird.

Es ist dadurch gemäß der vorliegenden Erfindung in vorteilhafter Weise - alternativ oder kumulativ - möglich, dass es mit gängigen Telekommunikationsendgeräten, d.h. solchen Telekommunikationsendgeräten, welche nicht zum Versenden einer Facsimile-Nachricht vorgesehen sind, möglich ist, textbasiert einen Notruf via Mobilfunk abzusetzen, der zu der zuständigen, insbesondere lokal zuständigen Notrufabfragestelle geroutet wird. Die Notrufabfragestelle ist gemäß der deutschen Rechtsordnung neben der Entgegennahme von sprachbasierten Notrufen lediglich zur Entgegennahme von Notrufen als Facsimile-Nachrichten eingerichtet, d.h. es kann nicht davon ausgegangen werden, dass die Notrufabfragestelle die Entgegennahme von Notrufnachrichten auch auf anderem Wege sicherstellen kann. Hierdurch ist es gemäß der vorliegenden Erfindung vorteilhaft möglich, dass eine praktikable Lösung zur Absetzung von Notrufen mit gängigen Telekommunikationsendgeräten (d.h. solchen, die typischerweise nativ keine Facsimile-Funktionalität zum Versand von Nachrichten bereitstellen) bereitgestellt wird, die die Versendung von textbasierten Notrufnachrichten gestattet und die Zustellung einer Facsimile-Nachricht bei der lokal zuständigen Notrufabfragestelle sicherstellt. Eine solche Funktionalität kann erfindungsgemäß auf der Basis von gängigen Telekommunikationsendgeräten beispielsweise - im Fall von programmierbaren Telekommunikationsendgeräten, insbesondere sogenannten intelligenten Telefonen (Smartphones) - mit einer Applikation (sogenannte App) realisiert werden oder aber mittels dezidierter Notruf-Telekommunikationsendgeräte.

Erfindungsgemäß ist es - alternativ oder kumulativ - vorgesehen, dass die textbasierte Notrufnachricht in Form von entweder einer E-Mail-Nachricht oder eine SMS-Nachricht (Short Message Service) oder einer MMS-Nachricht (Multimedia Messaging Service) oder einer RCS-Nachricht (Rich Communication Suite) oder einer Nachricht eines IP-basierten Messaging-Dienstes (z.B. WhatsApp, iMessage) vom Telekommunikationsendgerät in Abhängigkeit des Messaging-Dienstes (bzw. Nachrichtendienst) zum Mobilfunkkommunikationsnetz bzw. zu einer geeigneten Servereinrichtung des jeweiligen Nachrichtendienstes gesendet wird. Das bedeutet, dass die textbasierte Notrufnachricht insbesondere keine Facsimile-Nachricht ist - zumindest wird die textbasierte Notrufnachricht erfindungsgemäß nicht in Form einer Facsimile-Nachricht an das Mobilfunkkommunikationsnetz geleitet (d.h. es handelt es sich nicht um eine sogenannte "mobile-originated" Facsimile-Nachricht).

Unter IP-basierten Messaging-Diensten sind erfindungsgemäß insbesondere zu verstehen:
-- ein Nachrichtendienst vom Typ "sofortige Nachrichtenübermittlung" bzw. englisch "Instant Messaging" oder
-- ein Nachrichtendienst vom Typ "Chat-Dienst" bzw. englisch "Online Chat" bzw. "Web Chat".

Beispiele für IP-basierte Messaging-Dienste sind etwa standardisierte Dienste oder auch proprietäre Dienste, wie beispielsweise "WhatsApp" oder "iMessage" oder "Chat via Facebook".

Der Notrufdienst ist erfindungsgemäß für ein (geografisches) Gesamtgebiet eingerichtet, wobei das Gesamtgebiet in eine Mehrzahl von Teilgebieten unterteilt ist. Erfindungsgemäß umfasst das System des Notrufdienstes eine Mehrzahl von Notrufabfragestellen, wobei jeweils eine lokal zuständige Notrufabfragestelle der Mehrzahl von Notrufabfragestellen einem bestimmten Teilgebiet der Mehrzahl von Teilgebieten zugeordnet ist.

Die erfindungsgemäß in Form von entweder einer E-Mail-Nachricht oder einer SMS-Nachricht (Short Message Service) oder einer MMS-Nachricht (Multimedia Messaging Service) oder einer RCS-Nachricht (Rich Communication Suite) oder einer Nachricht eines IP-basierten Messaging-Dienstes vom Telekommunikationsendgerät zum Mobilfunkkommunikationsnetz bzw. über das Mobilfunkkommunikationsnetz zu einem geeigneten Server des jeweiligen Nachrichtendienstes gesendete Notrufnachricht wird erfindungsgemäß als eine Facsimile-Nachricht den Notrufabfragestellen des Notrufdienstes zugeleitet, wobei eine jeweils unterschiedliche Facsimile-Telefonnummer jeder der lokal zuständigen Notrufabfragestellen zugeordnet ist.

Die textbasierte Notrufnachricht wird erfindungsgemäß in die Facsimile-Nachricht gewandelt, nachdem die textbasierte Notrufnachricht vom Telekommunikationsendgerät generiert und an das Mobilfunkkommunikationsnetz bzw. über das Mobilfunkkommunikationsnetz zu einem geeigneten Server des jeweiligen Nachrichtendienstes übertragen wurde. In einem ersten Verfahrensschritt wird dabei in Abhängigkeit der momentanen räumlichen Zuordnung des Telekommunikationsendgeräts zu einem Teilgebiet der Mehrzahl von Teilgebieten die lokal zuständige Notrufabfragestelle der Mehrzahl von Notrufabfragestellen ermittelt. In einem dem ersten Verfahrensschritt nachfolgenden zweiten Verfahrensschritt wird die zugeordnete Facsimile-Rufnummer der im ersten Verfahrensschritt ermittelten lokal zuständigen Notrufabfragestelle der Mehrzahl von Notrufabfragestellen ermittelt. In einem dem zweiten Verfahrensschritt nachfolgenden dritten Verfahrensschritt wird die zu sendende Notrufnachricht als Facsimile-Nachricht an die lokal zuständige Notrufabfragestelle der Mehrzahl von Notrufabfragestellen unter Verwendung der im zweiten Verfahrensschritt ermittelten Facsimile-Rufnummer der lokal zuständigen Notrufabfragestelle übertragen.

Erfindungsgemäß ist es alternativ entweder vorgesehen, dass eine Implementierung der Erfindung -gemäß einer ersten Ausführungsform bzw. Ausführungsvariante der Erfindung - in einer endgerätebasierten Art und Weise erfolgt, oder aber vorgesehen, dass eine Implementierung der Erfindung - gemäß einer zweiten Ausführungsform bzw. Ausführungsvariante der Erfindung - in einer netzbasierten Art und Weise erfolgt.

Bei der ersten Ausführungsvariante bzw. Ausführungsform der Erfindung ist es vorgesehen, dass das Telekommunikationsendgerät zu jedem der Teilgebiete (des Gesamtgebiets des Notrufdienstes), d.h. insbesondere zu jeder Mobilfunkzelle des zugehörigen Betreibers des Mobilfunkkommunikationsnetzes (bzw. "Providers") die lokal anzuwendende (d.h. geografischen) Facsimile-Rufnummer des Notrufdienstes
-- entweder (in einer Speichereinrichtung des Telekommunikationsendgeräts) eingespeichert umfasst
-- oder aber die lokal anzuwendende Facsimile-Rufnummer des Notrufdienstes zumindest (in einer dem Telekommunikationsendgerät mittels einer Abfrage zugänglichen weiteren Speichereinrichtung (des Mobilfunkkommunikationsnetzes, d.h. insbesondere eine Online-Schnittstelle zu einer Datenbank mit den geografischen Facsimile-Rufnummern)) abfragbar dem Telekommunikationsendgerät zur Verfügung ist.
Für den Fall mehrerer separater Notrufdienste (beispielsweise ein Notrufdienst "Polizeinotruf" und ein Notrufdienst "Feuerwehrnotruf") sind erfindungsgemäß insbesondere mehrere separate Facsimile-Rufnummern (für jeweils die Polizei und die Feuerwehr) im Telekommunikationsendgerät abgespeichert oder dem Telekommunikationsendgerät mittels einer Abfrage bei der weiteren Speichereinrichtung des Mobilfunkkommunikationsnetzes abfragbar. Erfindungsgemäß ist es daher gemäß der ersten Ausführungsvariante bzw. der ersten Ausführungsform vorgesehen, dass zur Ermittlung der Facsimile-Rufnummer der lokal zuständigen Notrufabfragestelle in einer Speichereinrichtung des Telekommunikationsendgeräts und/oder in einer vom Telekommunikationsendgerät abfragbaren weiteren Speichereinrichtung gespeicherte Rufnummerninformationen verwendet werden. Hierbei wird dann diejenige Facsimile-Rufnummer (bzw. die Facsimile-Rufnummer derjenigen Notrufabfragestelle) bestimmt, die der jeweils aktuellen Funkzelle des Telekommunikationsendgeräts entspricht bzw. die dem jeweils aktuellen anderen geographischen Zuordnungsparameter (beispielsweise eine Ortskoordinateninformation eines Satellitennavigationssystems wie etwa GPS (Global Positioning System), eine Information eines bekannten WLAN-Netzes (Wireless Local Area Network) oder eine Information zum lokal gültigen Allgemeinen Gemeindeschlüssel Notruf (AGSN)) entspricht. Das Endgerät bzw. das Telekommunikationsendgerät muss daher in der Lage sein, einer Standortinformation (wie etwa der GPS-Koordinateninformation oder auch der Funkzelleninformation) die zugehörige geografische Facsimile-Rufnummer (der lokal zuständigen Notrufabfragestelle) zuzuordnen.
Für die Verlässlichkeit des erfindungsgemäßen Verfahrens muss insbesondere sichergestellt werden, dass die Tabelle oder die Mehrzahl solcher Tabellen - in der Speichereinrichtung des Telekommunikationsendgeräts, d.h. auf dem Endgerät, bzw. in der weiteren Speichereinrichtung, d.h. in der Datenbank aller solcher Facsimile-Rufnummern - für jeweils die verschiedenen Notrufabfragestellen der Mehrzahl von Notrufabfragestellen des Notrufdienstes regelmäßig - möglichst automatisiert - aktualisiert werden.

Bei der zweiten Ausführungsvariante bzw. Ausführungsform der Erfindung ist es vorgesehen, dass die Informationen der textbasierten Notrufnachricht vom Telekommunikationsendgerät zum Mobilfunkkommunikationsnetz oder über das Mobilfunkkommunikationsnetz an eine geeignete Servereinrichtung zur Verarbeitung der textbasierten Notrufnachricht übermittelt werden. Die Notrufnachricht wird notrufdienstspezifisch und / oder nachrichtendienstspezifisch adressiert mit einer im Gesamtgebiet einheitlichen Adresse (z.B. 110, 110@notruf.de, notruf@notruf.de). Geht aus der Adresse nicht hervor, für welchen Notrufdienst die Notrufnachricht gedacht ist (etwa im Falle notruf@notruf.de), muss der spezifische Notrufdienst als Teil der Notrufnachricht eindeutig benannt sein (etwa "Polizei", "Feuerwehr" oder auch "110", "112"). Im Mobilfunkkommunikationsnetz bzw. im Server des jeweiligen Nachrichtendienstes werden dann eine Auswertung und Auflösung der jeweils lokal zu verwendenden Facsimile-Rufnummer anhand einer Information über den örtlichen Aufenthalt des Telekommunikationsendgeräts durchgeführt. Das
Mobilfunkkommunikationsnetz bzw. der Server werten aus oder ermitteln (beispielsweise via ortsbezogener Dienste, sogenannter Location Based Services, LBS, auf Basis der Rufnummer) beispielsweise die Funkzelle, aus der der Notrufende die Notrufnachricht abgesandt hat und ermitteln zu der Funkzelle des Telekommunikationsendgeräts die zugehörige Facsimile-Langrufnummer, d.h. die Facsimile-Rufnummer der lokal zuständigen Notrufabfragestelle des jeweiligen Notrufdienstes. Alternativ kann, beispielsweise aus der Information der aktuellen GPS-Koordinate des Telekommunikationsendgeräts, der aktuelle AGSN ausgewertet oder ermittelt werden und diesem die zugehörige Fascimile-Langrufnummer zugeordnet werden oder aber die zugehörige Fascimile-Langrufnummer direkt aus der Information der aktuellen GPS-Koordinate des Telekommunikationsendgeräts ermittelt werden.

Mittels einer entsprechenden Umwandlungseinrichtung, die dem Mobilfunknetz bzw. dem Server des jeweiligen Nachrichtendienstes zugeordnet ist oder aber separat angeordnet ist und vom Mobilfunknetz bzw. dem Server aus nutzbar ist, wird der Text der Notrufnachricht - insbesondere auch die Rufnummer des den Notruf Aussendenden - in eine Facsimile-Nachricht gewandelt und an die ermittelte Facsimile-Rufnummer der Notrufabfragestelle gesandt, wobei das Mobilfunknetz, der Server bzw. die Umwandlungseinrichtung einen Zugang zum Festnetz bzw. allgemein zum Telekommunikationsnetz, zu dem die Facsimile-Rufnummern gehören, haben müssen.

Da die Standortinformationen des Telekommunikationsendgeräts, d.h. die Informationen, wo sich das Telekommunikationsendgerät befindet, netzbasiert ermittelt werden, ist dieser Vorgang weitgehend manipulationssicher. Erfindungsgemäß ist es vorteilhaft vorgesehen, dass gemäß der zweiten Ausführungsform zur Ermittlung des Kommunikationsprofils, insbesondere der Facsimile-Rufnummer, der lokal zuständigen Notrufabfragestelle
-- in einer Datenbankeinrichtung des Mobilfunkkommunikationsnetzes oder des Nachrichtendienstes gespeicherte Kommunikationsprofilinformationen, insbesondere Rufnummerninformationen, und/oder
-- in einer weiteren Datenbankeinrichtung des Notrufdienstes gespeicherte Kommunikationsprofilinformation, insbesondere Rufnummerninformationen,
verwendet werden. Auch bei der zweiten Ausführungsform der Erfindung ist für den Fall mehrerer separater Notrufdienste (beispielsweise ein Notrufdienst "Polizeinotruf" und ein Notrufdienst "Feuerwehrnotruf") erfindungsgemäß insbesondere vorgesehen, dass mehrere separate Facsimile-Rufnummern (für jeweils die Polizei und die Feuerwehr) in der weiteren Datenbankeinrichtung des Notrufdienstes und/oder in der Datenbankeinrichtung des Mobilfunkkommunikationsnetzes bzw. des jeweiligen Nachrichtendienstes gespeichert sind.

Es wird wiederum diejenige Facsimile-Rufnummer (bzw. die Facsimile-Rufnummer derjenigen Notrufabfragestelle) bestimmt, die der jeweils aktuellen Funkzelle des Telekommunikationsendgeräts entspricht bzw. die dem jeweils aktuellen anderen geographischen Zuordnungsparameter entspricht. Wiederum ist für die Verlässlichkeit des erfindungsgemäßen Verfahrens sicherzustellen, dass die Zuordnungsinformationen in der weiteren Datenbankeinrichtung des Notrufdienstes bzw. die Zuordnungsinformationen in der Datenbankeinrichtung des Mobilfunkkommunikationsnetzes oder des Nachrichtendienstes für jeweils die verschiedenen Notrufabfragestellen der Mehrzahl von Notrufabfragestellen des Notrufdienstes möglichst regelmäßig aktualisiert werden.

Erfindungsgemäß ist es bevorzugt vorgesehen - insbesondere gemäß der ersten Ausführungsform -, dass zur Ermittlung der lokal zuständigen Notrufabfragestelle eine oder eine Mehrzahl der nachfolgenden Informationen genutzt wird:
-- eine Identitätsinformation bezüglich der momentan vom Telekommunikationsendgerät genutzten Funkzelle des Mobilfunkkommunikationsnetzes,
-- Ortungsinformationen eines Satellitennavigationssystems bezüglich des Telekommunikationsendgeräts, für den Fall, dass das Telekommunikationsendgerät einen Empfänger zum Empfang von Signalen des Satellitennavigationssystems umfasst.

Durch die Nutzung der Identitätsinformation bezüglich der momentan vom Telekommunikationsendgerät genutzten Funkzelle des Mobilfunkkommunikationsnetzes ist es erfindungsgemäß vorteilhaft möglich, besonders einfach und schnell eine sinnvolle Zuordnung zu einer Notrufabfragestelle bzw. zu einer für die Weiterleitung der textbasierten Notrufnachricht zu verwendenden Facsimile-Rufnummer zu erreichen. Gegebenenfalls kann es jedoch zu suboptimalen Zuordnungen kommen, beispielsweise wenn Funkzellen eine vergleichsweise große Flächenausdehnung aufweisen. Das bezüglich der Auswertung der Identitätsinformation der momentan vom Telekommunikationsendgerät genutzten Funkzelle zusätzliche oder auch alternative Auswerten einer weiteren Ortungsinformation, insbesondere eine Ortskoordinateninformation eines Satellitennavigationssystems, kann erfindungsgemäß in vorteilhafter Weise zu einer genaueren Bestimmung und folglich genaueren und sinnvolleren Zuordnung des Telekommunikationsendgeräts zu einer Notrufabfragestelle führen. Dies gelingt insbesondere dann, wenn mittels des zusätzlichen oder alternativen Auswertens der relevante Allgemeine Gemeindeschlüssel Notruf (AGSN) bestimmt werden kann.

Ferner ist es erfindungsgemäß weiterhin auch bevorzugt vorgesehen, dass die Adressierung der Notrufnachricht für das Gesamtgebiet nachrichtendienstspezifisch und/oder notrufdienstspezifisch einheitlich ist, also beispielsweise "110" für alle für die Polizei bestimmten erfindungsgemäßen Notrufnachrichten via SMS, die irgendwo im Gesamtgebiet abgesetzt werden, oder 110@notruf.de für alle für die Polizei bestimmten erfindungsgemäßen Notrufnachrichten via E-Mail, die irgendwo im Gesamtgebiet abgesetzt werden.

Dies hat in vorteilhafter Weise zur Folge, dass die Menge und Komplexität der auf dem Telekommunikationsendgerät vorzuhaltenden Informationen in Form von entweder der Informationen bezüglich der für die einzelnen Notrufabfragestellen anzuwendenden Facsimile-Rufnummern oder aber in Form von entsprechenden Programminformationen zur Abfrage (bei der weiteren Speichereinrichtung) der jeweils anzuwendenden Facsimile-Rufnummern geringer gehalten werden können.

Erfindungsgemäß ist es - gemäß sowohl der ersten als auch der zweiten Ausführungsform der Erfindung - besonders bevorzugt ferner vorgesehen, dass die Notrufnachricht das Kommunikationsprofil, insbesondere die Facsimile-Rufnummer, der lokal zuständigen Notrufabfragestelle aufweist oder das Kommunikationsprofil, insbesondere die Facsimile-Rufnummer, an die Notrufnachricht angefügt wird oder das Kommunikationsprofil, insbesondere die Facsimile-Rufnummer, mit der Notrufnachricht mitübertragen wird.

Gemäß der ersten Ausführungsform kann die Facsimile-Rufnummer dadurch bereits durch das Telekommunikationsendgerät der Notrufnachricht beigefügt werden, weil bereits zu diesem Zeitpunkt die Facsimile-Rufnummer der entsprechenden und zuständigen Notrufabfragestelle aufgelöst ist.

Erfindungsgemäß ist es ferner bevorzugt vorgesehen, dass die Notrufnachricht wenigstens eine der nachfolgenden Informationen umfasst oder wenigstens eine der nachfolgenden Informationen mit der Notrufnachricht mitübertragen wird/werden
-- die Rufnummer, die der den Notruf Aussendende nutzt,
-- eine Identitätsinformation bezüglich der momentan vom Telekommunikationsendgerät genutzten Funkzelle des Mobilfunkkommunikationsnetzes,
-- Ortungsinformationen eines Satellitennavigationssystems bezüglich des Telekommunikationsendgeräts, für den Fall, dass das Telekommunikationsendgerät einen Empfänger zum Empfang von Signalen des Satellitennavigationssystems umfasst,
-- sensorermittelte Daten eines Sensors, insbesondere eines Aspekte des Gesundheitszustandes überwachenden oder messenden Sensors, insbesondere eines Blutdrucksensors und/oder eines Pulssensors und/oder eines Blutzuckersensors, der entweder mit dem Telekommunikationsendgerät über eine Datenübertragungsverbindung verbunden ist oder den das Telekommunikationsendgerät umfasst,
-- eine Freitextinformation, insbesondere zur Übertragung einer Information über die persönliche Situation und/oder die Erreichbarkeit des die Notrufnachricht Sendenden

und/oder über die Natur der Notrufnachricht als Feuerwehrnotrufnachricht oder als Polizeinotrufnachricht.

Erfindungsgemäß bevorzugt umfasst die Notrufnachricht wenigstens die Rufnummer, die der den Notruf Aussendende nutzt, oder mit der Notrufnachricht wird wenigstens die Rufnummer, die der den Notruf Aussendende nutzt, mitübertragen - d.h. wenigstens die Rufnummer wird insbesondere in jedem Fall verwendet. Insbesondere sind Sicherheitsmechanismen vorgesehen, die sich auf die Notrufnachricht beziehen (beispielsweise um Spam zu vermeiden). Beispielsweise umfassen die Sicherheitsmechanismen den Einsatz digitaler Zertifikate bzw. Signaturen. Erfindungsgemäß bevorzugt wird die Authentizität der textbasierten Notrufnachricht durch die Servereinrichtung geprüft.

Ferner ist es erfindungsgemäß bevorzugt, dass neben dem Notrufdienst ein eine Mehrzahl von weiteren Teilgebieten umfassendes weiteres Gesamtgebiet eingerichteter weiterer Notrufdienst vorgesehen ist, wobei der weitere Notrufdienst eine Mehrzahl von weiteren Notrufabfragestellen aufweist, wobei jeweils eine lokal zuständige weitere Notrufabfragestelle der Mehrzahl von weiteren Notrufabfragestellen einem bestimmten weiteren Teilgebiet der Mehrzahl von weiteren Teilgebieten zugeordnet ist, wobei eine weitere Notrufnachricht als eine weitere notrufabfragestellenspezifische Textnachricht, insbesondere Facsimile-Nachricht, den weiteren Notrufabfragestellen zugeleitet wird, wobei ein jeweils unterschiedliches Kommunikationsprofil, insbesondere Facsimile-Telefonnummer, jeder der lokal zuständigen weiteren Notrufabfragestellen zugeordnet ist.

Weiterhin ist es erfindungsgemäß vorgesehen, dass der für das Gesamtgebiet eingerichtete Notrufdienst ein national oder international eingerichteter Notrufdienst ist, wobei das Gesamtgebiet das Staatsgebiet eines Nationalstaats oder einer Mehrzahl von Nationalstaaten umfasst.

Ein weiterer Gegenstand der vorliegenden Erfindung ist ein System zur Übertragung einer textbasierten Notrufnachricht, wobei das System ein mobiles Telekommunikationsendgerät und ein Mobilfunkkommunikationsnetz umfasst,
wobei die textbasierte Notrufnachricht
-- eine E-Mail-Nachricht, oder
-- eine SMS-Nachricht (Short Message Service), oder
-- eine MMS-Nachricht (Multimedia Messaging Service), oder
-- eine RCS-Nachricht (Rich Communication Suite)
-- eine Nachricht eines IP-basierten Messaging-Dienstes
   ist, wobei ein für ein eine Mehrzahl von Teilgebieten umfassendes Gesamtgebiet eingerichteter Notrufdienst eine Mehrzahl von Notrufabfragestellen aufweist, wobei jeweils eine lokal zuständige Notrufabfragestelle der Mehrzahl von Notrufabfragestellen einem bestimmten Teilgebiet der Mehrzahl von Teilgebieten zugeordnet ist, wobei das System derart konfiguriert ist, dass die Notrufnachricht als eine notrufabfragestellenspezifische Textnachricht den Notrufabfragestellen zugeleitet wird, wobei ein jeweils unterschiedliches Kommunikationsprofil jeder der lokal zuständigen Notrufabfragestellen zugeordnet ist, wobei das System ferner derart konfiguriert ist, dass die Notrufnachricht in die notrufabfragestellenspezifische Textnachricht gewandelt wird, nachdem die textbasierte Notrufnachricht vom Telekommunikationsendgerät generiert und an das Mobilfunkkommunikationsnetz oder über das Mobilfunkkommunikationsnetz an eine geeignete Servereinrichtung zur Verarbeitung der textbasierten Notrufnachricht übertragen wurde, wobei das System ferner derart konfiguriert ist, dass im Fall einer zu sendenden Notrufnachricht
-- in Abhängigkeit der momentanen räumlichen Zuordnung des Telekommunikationsendgeräts zu einem Teilgebiet der Mehrzahl von Teilgebieten die lokal zuständige Notrufabfragestelle der Mehrzahl von Notrufabfragestellen ermittelt wird,
-- das zugeordnete Kommunikationsprofil der ermittelten lokal zuständigen Notrufabfragestelle der Mehrzahl von Notrufabfragestellen ermittelt wird und
-- die zu sendende Notrufnachricht als notrufabfragestellenspezifische Textnachricht
   -- an die lokal zuständige Notrufabfragestelle der Mehrzahl von Notrufabfragestellen
      oder
   -- an ein der lokal zuständigen Notrufabfragestelle der Mehrzahl von Notrufabfragestellen zugeordnetes elektronisches Postfach
   unter Verwendung des ermittelten Kommunikationsprofiles der lokal zuständigen Notrufabfragestelle übertragen wird.

Alternativ oder kumulativ ist ein weiterer Gegenstand der vorliegenden Erfindung ein System zur Übertragung einer textbasierten Notrufnachricht, wobei das System ein mobiles Telekommunikationsendgerät und ein Mobilfunkkommunikationsnetz umfasst,
wobei die textbasierte Notrufnachricht
-- eine E-Mail-Nachricht, oder
-- eine SMS-Nachricht (Short Message Service), oder
-- eine MMS-Nachricht (Multimedia Messaging Service), oder
-- eine RCS-Nachricht (Rich Communication Suite)
-- eine Nachricht eines IP-basierten Messaging-Dienstes ist, wobei ein für ein eine Mehrzahl von Teilgebieten umfassendes Gesamtgebiet eingerichteter Notrufdienst eine Mehrzahl von Notrufabfragestellen aufweist, wobei jeweils eine lokal zuständige Notrufabfragestelle der Mehrzahl von Notrufabfragestellen einem bestimmten Teilgebiet der Mehrzahl von Teilgebieten zugeordnet ist, wobei das System derart konfiguriert ist, dass die Notrufnachricht als eine Facsimile-Nachricht den Notrufabfragestellen zugeleitet wird, wobei eine jeweils unterschiedliche Facsimile-Telefonnummer jeder der lokal zuständigen Notrufabfragestellen zugeordnet ist, wobei das System ferner derart konfiguriert ist, dass die Notrufnachricht in die Facsimile-Nachricht gewandelt wird, nachdem die textbasierte Notrufnachricht vom Telekommunikationsendgerät generiert und an das Mobilfunkkommunikationsnetz oder über das Mobilfunkkommunikationsnetz an eine geeignete Servereinrichtung zur Verarbeitung der textbasierten Notrufnachricht übertragen wurde, wobei das System ferner derart konfiguriert ist, dass im Fall einer zu sendenden Notrufnachricht
-- in Abhängigkeit der momentanen räumlichen Zuordnung des Telekommunikationsendgeräts zu einem Teilgebiet der Mehrzahl von Teilgebieten die lokal zuständige Notrufabfragestelle der Mehrzahl von Notrufabfragestellen ermittelt wird,
-- die zugeordnete Facsimile-Rufnummer der ermittelten lokal zuständigen Notrufabfragestelle der Mehrzahl von Notrufabfragestellen ermittelt wird und
-- die zu sendende Notrufnachricht als Facsimile-Nachricht an die lokal zuständige Notrufabfragestelle der Mehrzahl von Notrufabfragestellen unter Verwendung der ermittelten Facsimile-Rufnummer der lokal zuständigen Notrufabfragestelle übertragen wird.

Es ist hierdurch erfindungsgemäß - auch mit Bezug auf das System - vorteilhaft möglich, dass die textbasierte Notrufnachricht in Form von entweder einer E-Mail-Nachricht oder einer SMS-Nachricht (Short Message Service) oder einer MMS-Nachricht (Multimedia Messaging Service) oder einer RCS-Nachricht (Rich Communication Suite) oder einer Nachricht eines IP-basierten Messaging-Dienstes - welche jedoch keine Facsimile-Nachricht ist - vom Telekommunikationsendgerät zum Mobilfunkkommunikationsnetz oder über das Mobilfunkkommunikationsnetz an eine geeignete Servereinrichtung zur Verarbeitung der textbasierten Notrufnachricht gesendet wird.

Bevorzugt ist es erfindungsgemäß - auch mit Bezug auf das System - vorgesehen, dass das System eine Umwandlungseinrichtung aufweist, wobei die Umwandlungseinrichtung derart konfiguriert ist, dass die Notrufnachricht in eine notrufabfragestellenspezifische Textnachricht, insbesondere Facsimile-Nachricht, gewandelt wird, nachdem die textbasierte Notrufnachricht vom Telekommunikationsendgerät generiert und an das Mobilfunkkommunikationsnetzes oder über das Mobilfunkkommunikationsnetz an eine geeignete Servereinrichtung zur Verarbeitung der textbasierten Notrufnachricht übertragen wurde.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder einem programmierbaren Telekommunikationsendgerät und/oder einer Umwandlungseinrichtung, insbesondere in Teilen auf einem programmierbaren Telekommunikationsendgerät und in Teilen auf einer Umwandlungseinrichtung, ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder einem programmierbaren Telekommunikationsendgerät und/oder einer Umwandlungseinrichtung, insbesondere in Teilen auf einem programmierbaren Telekommunikationsendgerät und in Teilen auf einer Umwandlungseinrichtung, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Gesamtgebietes, welches eine Mehrzahl von Teilgebieten umfasst.
- **Figur 2**: zeigt eine schematische Ansicht eines erfindungsgemäßen Systems gemäß einer ersten Ausführungsvariante der Erfindung mit einem Telekommunikationsendgerät, einem Mobilfunkkommunikationsnetz und einer Mehrzahl von lokal zuständigen Notrufabfragestellen eines Notrufdienstes.
- **Figur 3**: zeigt eine schematische Ansicht eines erfindungsgemäßen Systems gemäß einer zweiten Ausführungsvariante der Erfindung mit einem Telekommunikationsendgerät, einem Mobilfunkkommunikationsnetz und einem Notrufdienst mit einer Mehrzahl von lokal zuständigen Notrufabfragestellen.
- **Figur 4**: zeigt eine schematische Ansicht eines erfindungsgemäßen Systems gemäß einer modifizierten zweiten Ausführungsvariante der Erfindung mit einem Telekommunikationsendgerät, einem Mobilfunkkommunikationsnetz und einem Notrufdienst mit einer Mehrzahl von lokal zuständigen Notrufabfragestellen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

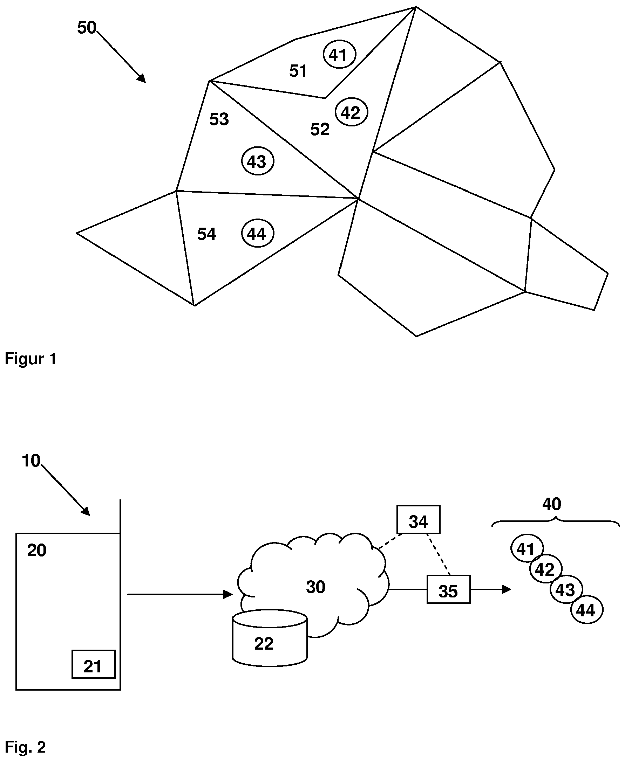

In Figur 1 ist schematisch eine Ansicht eines Gesamtgebietes 50 dargestellt, welches eine Mehrzahl von Teilgebieten, nämlich ein erstes Teilgebiet 51, ein zweites Teilgebiet 52, ein drittes Teilgebiet 53 und ein viertes Teilgebiet 54, umfasst. Weitere Teilgebiete des Gesamtgebiets existieren bzw. sind angedeutet, sind jedoch nicht mittels eines eigenen Bezugszeichens bezeichnet. In dem Gesamtgebiet 50 ist ein Notrufdienst eingerichtet, wobei in dem Gesamtgebiet 50 bezüglich des Notrufdienstes für jeweils ein Teilgebiet eine Notrufabfragestelle vorgesehen ist - d.h. für die vier mit einem Bezugszeichen versehenen Teilgebiete 51, 52, 53 ,54: eine erste Notrufabfragestelle 41 für das erste Teilgebiet 51, eine zweite Notrufabfragestelle 42 für das zweite Teilgebiet 52, eine dritte Notrufabfragestelle 43 für das dritte Teilgebiet 53 und eine vierte Notrufabfragestelle 44 für das vierte Teilgebiet 54.

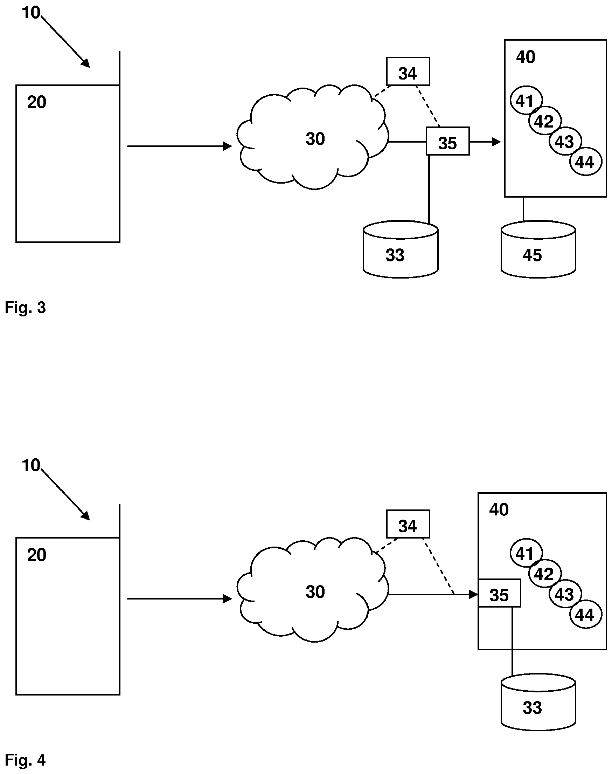

Erfindungsgemäß wird eine Notrufnachricht von einem Telekommunikationsendgerät 20 unter Benutzung eines Mobilfunkkommunikationsnetzes 30 ausgesendet. Dies ist gemäß einer ersten Ausführungsform in Figur 2 und gemäß einer zweiten Ausführungsform in Figur 3 schematisch dargestellt. Erfindungsgemäß ist die textbasierte Notrufnachricht in Form von entweder einer E-Mail-Nachricht oder einer SMS-Nachricht (Short Message Service) oder einer MMS-Nachricht (Multimedia Messaging Service) oder einer RCS-Nachricht (Rich Communication Suite) oder einer Nachricht eines IP-basierten Messaging-Dienstes vorgesehen.

Entweder weist das Mobilfunkkommunikationsnetz 30 einen Netzknoten bzw. eine Einrichtung zur Umwandlung einer Nachricht in eine Facsimile-Nachricht (d.h. eine Umwandlungseinrichtung) auf oder aber eine (vom Mobilfunkkommunikationsnetz 30 separate Umwandlungseinrichtung 35 ist vorgesehen (beispielsweise auch eine Umwandlungseinrichtung als Teil des Notrufdienstes), wobei die Umwandlungseinrichtung 35 (entweder integriert in das Mobilfunkkommunikationsnetz oder separat) derart konfiguriert ist, dass diese die textbasierte Notrufnachricht in eine Facsimile-Nachricht umwandelt und der jeweils zuständigen der Notrufabfragestellen 41, 42, 43, 44 zuleitet.

Sowohl in Figur 2 als auch in Figur 3 und in Figur 4 ist die Umwandlungseinrichtung 35 zur Umwandlung und Zustellung der textbasierten Notrufnachricht vorgesehen, wobei die textbasierte Notrufnachricht in der Umwandlungseinrichtung 35 direkt empfangen und verarbeitet wird, sofern es sich bei der textbasierten Notrufnachricht um eine Nachricht gemäß eines mobilfunkspezifischen Nachrichtendienstes wie SMS, MMS bzw. RCS handelt. Für die Umwandlung und Zustellung der textbasierten Notrufnachricht in Form einer Nachricht eines "nicht mobilfunkspezifischen Nachrichtendienstes" ist es erfindungsgemäß insbesondere vorgesehen, dass ein weiterer Netzknoten 34 vorhanden ist, der für die Behandlung von textbasierten Notrufnachrichten in Form von Internet Protokoll-basierten Nachrichten (d.h. für E-Mail und eine IP-basierten Messagingdienst) genutzt wird, was in den Figuren 2, 3 und 4 mittels einer gestrichelten Linie dargestellt ist.

Die Notrufnachricht wird vom Telekommunikationsendgerät 20 zum Mobilfunkkommunikationsnetz 30 gesendet. Erfindungsgemäß ist daher die textbasierte Notrufnachricht keine Facsimile-Nachricht bzw. sie wird erfindungsgemäß nicht in Form einer Facsimile-Nachricht an das Mobilfunkkommunikationsnetz 30 geleitet. Die Notrufnachricht wird unter Nutzung des Mobilfunkkommunikationsnetzes 30 als Facsimile-Nachricht an eine der Notrufabfragestellen 41, 42, 43, 44 übermittelt. Das Mobilfunkkommunikationsnetz 30 weist hierfür erfindungsgemäß die Umwandlungseinrichtung 35 auf (bzw. die Umwandlungseinrichtung 35 ist separat vom Mobilfunkkommunikationsnetz 30 vorhanden), wobei die Umwandlungseinrichtung 35 derart konfiguriert ist, dass diese die textbasierte Notrufnachricht in eine Facsimile-Nachricht umwandelt und der jeweils zuständigen der Notrufabfragestellen 41, 42, 43, 44 zuleitet.

Bei der in Figur 2 schematisch dargestellten ersten Ausführungsform der Erfindung ist es vorgesehen, dass das Telekommunikationsendgerät 20 zu jedem der Teilgebiete 51, 52, 53, 54, d.h. insbesondere zu jeder Mobilfunkzelle des zugehörigen Betreibers des Mobilfunkkommunikationsnetzes 30, die lokal anzuwendende Facsimile-Rufnummer des Notrufdienstes 40 in einer Speichereinrichtung 21 des Telekommunikationsendgeräts 20 eingespeichert umfasst. Alternativ oder kumulativ zur lokalen Speicherung in der Speichereinrichtung des Telekommunikationsendgeräts 20 ist es bei der ersten Ausführungsform der Erfindung vorgesehen, dass die lokal anzuwendende Facsimile-Rufnummer der lokal zuständigen der Notrufabfragestellen 41, 42, 43, 44 des Notrufdienstes 40 zumindest in einer - dem Telekommunikationsendgerät 20 mittels einer Abfrage zugänglichen -weiteren Speichereinrichtung 22 (des Mobilfunkkommunikationsnetzes 30, d.h. insbesondere eine Online-Schnittstelle zu einer Datenbank mit den geografischen Facsimile-Rufnummern) abfragbar vorliegt und dadurch dem Telekommunikationsendgerät 20 zur Verfügung steht. Mittels einer Umwandlungseinrichtung 35, d.h. insbesondere mittels eines Servers innerhalb des Mobilfunkkommunikationsnetzes 30 bzw. allgemein innerhalb des Telekommunikationsnetzes 30 zur Übertragung der Notrufnachricht bzw. mittels einer Umwandlungseinrichtung separat vom Mobilfunkkommunikationsnetz 30, wird der Text der Notrufnachricht - insbesondere auch die Rufnummer des den Notruf Aussendenden - in eine Facsimile-Nachricht gewandelt und an die ermittelte Facsimile-Rufnummer der Notrufabfragestellen 41, 42, 43, 44 gesandt.

Erfindungsgemäß ist es gemäß der ersten Ausführungsform vorgesehen, dass zur Ermittlung der Facsimile-Rufnummer der lokal zuständigen Notrufabfragestelle 41, 42, 43, 44 in der Speichereinrichtung 21 des Telekommunikationsendgeräts 20 und/oder in einer vom Telekommunikationsendgerät 20 abfragbaren weiteren Speichereinrichtung 22 gespeicherte Rufnummerninformationen verwendet werden. Hierbei wird dann diejenige Facsimile-Rufnummer (bzw. die Facsimile-Rufnummer derjenigen Notrufabfragestelle) bestimmt, die der jeweils aktuellen Funkzelle des Telekommunikationsendgeräts 20 entspricht bzw. die dem jeweils aktuellen anderen geographischen Zuordnungsparameter (beispielsweise eine Ortskoordinateninformation eines Satellitennavigationssystems wie etwa GPS (Global Positioning System), eine Information eines bekannten WLAN-Netzes (Wireless Local Area Network) oder dergleichen) entspricht. Das Endgerät bzw. das Telekommunikationsendgerät muss daher in der Lage sein, einer Standortinformation (wie etwa die GPS-Koordinateninformation oder auch die Funkzelleninformation) die zugehörige geografische Facsimile-Rufnummer (der lokal zuständigen Notrufabfragestelle) zuzuordnen.

Bei der in Figur 3 und in der Figur 4 schematisch dargestellten zweiten Ausführungsvariante bzw. Ausführungsform der Erfindung ist es vorgesehen, dass die Informationen der textbasierten Notrufnachricht mit einer im Gesamtgebiet für einen Notrufdienst nachrichtendienstspezifisch und/oder notrufdienstspezifisch einheitlichen Adresse vom Telekommunikationsendgerät 20 zum Mobilfunkkommunikationsnetz 30 übermittelt wird. Für die Umwandlung und Zustellung der textbasierten Notrufnachricht in Form einer Nachricht eines "nicht mobilfunkspezifischen Nachrichtendienstes" ist es erfindungsgemäß insbesondere vorgesehen, dass der weitere Netzknoten 34 vorhanden ist, der für die Behandlung von textbasierten Notrufnachrichten in Form von Internet Protokoll-basierten Nachrichten (d.h. für E-Mail und eine IP-basierten Messagingdienst) genutzt wird, was in den Figuren 2, 3 und 4 mittels einer gestrichelten Linie dargestellt ist.

Gemäß der in Figur 3 dargestellten beispielhaften Variante der zweiten Ausführungsform wird im Mobilfunkkommunikationsnetz 30 dann eine Auswertung und Auflösung der jeweils lokal zu verwendenden Facsimile-Rufnummer anhand einer Information über den örtlichen Aufenthalt des Telekommunikationsendgeräts 20 durchgeführt. Das Mobilfunkkommunikationsnetz 30 wertet aus oder ermittelt (beispielsweise via ortsbezogene Dienste, sogenannte Location Based Services, LBS, auf Basis der Rufnummer) die Funkzelle, aus der der Notrufende die Notrufnachricht abgesandt hat, ermittelt zu der Funkzelle des Telekommunikationsendgeräts 20 die zugehörige Facsimile-Langrufnummer, d.h. die Facsimile-Rufnummer der lokal zuständigen Notrufabfragestelle bzw. des zuständigen Notrufträgers. Mittels der entsprechenden Umwandlungseinrichtung 35, d.h. insbesondere mittels eines Servers innerhalb des Mobilfunkkommunikationsnetzes bzw. allgemein innerhalb des Telekommunikationsnetzes 30 zur Übertragung der Notrufnachricht, wird der Text der Notrufnachricht - insbesondere auch die Rufnummer des den Notruf Aussendenden - in eine Facsimile-Nachricht gewandelt und an die ermittelte Facsimile-Rufnummer der Notrufabfragestelle gesandt. Da die Standortinformationen des Telekommunikationsendgeräts 20, d.h. die Informationen, wo sich das Telekommunikationsendgerät 20 befindet, netzbasiert ermittelt werden, ist dieser Vorgang weitgehend manipulationssicher. Erfindungsgemäß ist es vorteilhaft vorgesehen, dass gemäß der zweiten Ausführungsform der Erfindung (zur Ermittlung der Facsimile-Rufnummer der lokal zuständigen Notrufabfragestelle 41, 42, 43, 44) in einer weiteren Datenbankeinrichtung 45 des Notrufdienstes 40 gespeicherte Rufnummerninformationen und/oder in einer Datenbankeinrichtung 33 des Mobilfunkkommunikationsnetzes oder des Nachrichtendienstes gespeicherte Rufnummerninformationen verwendet werden.

Gemäß der in Figur 4 dargestellten beispielhaften Variante der zweiten Ausführungsform wird die Auswertung und Auflösung der jeweils lokal zu verwendenden Facsimile-Rufnummer anhand einer Information über den örtlichen Aufenthalt des Telekommunikationsendgeräts 20 durch die Umwandlungseinrichtung 35 und unter Nutzung der Datenbankeinrichtung 33 beim Notrufdienst 40 durchgeführt.

Sowohl bei der ersten Ausführungsform als auch bei der zweiten Ausführungsform der Erfindung ist für den Fall mehrerer separater Notrufdienste (beispielsweise ein Notrufdienst "Polizeinotruf" und ein Notrufdienst "Feuerwehrnotruf") erfindungsgemäß insbesondere vorgesehen, dass mehrere separate Facsimile-Rufnummern (für jeweils die Polizei und die Feuerwehr) in der Speichereinrichtung 21 im Telekommunikationsendgerät 20 und/oder in der weiteren Speichereinrichtung 22 und/oder in der weiteren Datenbankeinrichtung 45 des Notrufdienstes und/oder in der Datenbankeinrichtung 33 des Mobilfunkkommunikationsnetzes 30 oder des Nachrichtendienstes gespeichert sind.

Es wird diejenige Facsimile-Rufnummer (bzw. die Facsimile-Rufnummer derjenigen Notrufabfragestelle) bestimmt, die der jeweils aktuellen Funkzelle des Telekommunikationsendgeräts entspricht bzw. die dem jeweils aktuellen anderen geographischen Zuordnungsparameter entspricht. Wiederum ist für die Verlässlichkeit des erfindungsgemäßen Verfahrens sicherzustellen, dass die Zuordnungsinformationen in der Speichereinrichtung 21 im Telekommunikationsendgerät 20 und/oder in der weiteren Speichereinrichtung 22 und/oder in der weiteren Datenbankeinrichtung 45 des Notrufdienstes und/oder in der Datenbankeinrichtung 33 des Mobilfunkkommunikationsnetzes 30 oder des Nachrichtendienstes für jeweils die verschiedenen Notrufabfragestellen 41, 42, 43, 44 des Notrufdienstes 40 bzw. der verschiedenen weiteren Notrufabfragestellen des weiteren Notrufdienstes möglichst aktualisiert werden.

Erfindungsgemäß ist es damit vorteilhaft möglich, dass ein Nutzer des Telekommunikationsendgeräts 20 lediglich einen Text als E-Mail-Nachricht bzw. als SMS-Nachricht bzw. als MMS-Nachricht bzw. als RCS-Nachricht oder als Nachricht eines IP-basierten Messaging-Dienstes schreibt, wobei der Text bzw. die Nachricht beispielsweise den spezifischen Grund des Notrufes sowie beispielsweise seine generelle persönliche Situation beschreibt. Ein solcher die Notrufnachricht sendender Benutzer des Telekommunikationsendgeräts 20 kann zusätzlich Hinweise zur Lokalität und zur Erreichbarkeit (neben etwa seiner E-Mail-Adresse(n) beispielsweise seine Rufnummer und/oder Rufnummern von Dritten) angeben. Eine auf einem programmierbaren Telefon einrichtbare Applikation bzw. Anwendung kann hierfür ggf. Textbausteine anbieten, wobei insbesondere vorgesehen sein kann, dass persönliche Daten des Nutzers bereits vorab eingegeben werden und nicht erst in der Situation des Notfalls bzw. in der Situation des Sendens der Notrufnachricht eingegeben werden müssen. Der die Notrufnachricht sendende Nutzer kann erfindungsgemäß insbesondere angeben, es sich um einen Notruf an die Polizei (Notrufnummer "110") oder an die Feuerwehr (Notrufnummer "112") handeln soll, d.h. welcher Notrufdienst benutzt werden soll (sofern neben dem Notrufdienst ein weiterer Notrufdienst eingerichtet ist). Die Anwendung bzw. Applikation (im Telekommunikationsendgerät 20) wertet erfindungsgemäß insbesondere
-- die aktuelle Funkzelle oder die aktuelle Standortinformation, die jeweils im Endgerät vorliegen, und
-- das gewünschte Ziel Polizei / Feuerwehr
aus und ergänzt den Text um die passende geografische Facsimile-Rufnummer der lokal zuständigen Notrufabfragestelle 41, 42, 43, 44. Die E-Mail-Nachricht bzw. die SMS-Nachricht bzw. die MMS-Nachricht bzw. die RCS-Nachricht bzw. die Nachricht des IP-basierten Messaging-Dienstes wird an einen geeigneten Server bzw. an die Umwandlungseinrichtung 35 geschickt, z.B. an einen speziellen Notrufserver, wobei eine geeignete einheitliche Adressierung genutzt wird (etwa 110@notruf.de bzw. 112@notruf.de oder notruf@notruf.de oder nur die Rufnummern "110" bzw. "112"). Der Server bzw. die Umwandlungseinrichtung 35 wertet den Text der E-Mail-Nachricht bzw. der SMS-Nachricht bzw. der MMS-Nachricht bzw. der RCS-Nachricht oder der Nachricht des IP-basierten Messaging-Dienstes aus, entnimmt die Fax-Nr. und wandelt den Text in ein Facsimile-Nachricht an diese Rufnummer um. Sollte (alternativ oder kumulativ) das Telekommunikationsendgerät 20 nicht (lokal) über die Informationen bezüglich der geografischen Facsimile-Rufnummern verfügen (d.h. in der Speichereinrichtung 21) oder von der weiteren Speichereinrichtung 22 abrufen können, so ergänzt die Anwendung bzw. Applikation den Text der Notrufnachricht um eine Standortinformation oder eine Information zur aktuellen Funkzelle, so dass entweder der Notrufserver bzw. die Umwandlungseinrichtung 35 (mittels der Datenbankeinrichtung 33) oder aber der Notrufdienst (mittels der weiteren Datenbankeinrichtung 45) die Zuordnung einer geografischen Facsimile-Rufnummer der zuständigen Notrufabfragestelle zur Standortinformation bzw. Funkzelle übernimmt.

Eine Antwort kann bei Vorliegen einer E-Mail-Adresse des Notrufenden via einer E-Mail-Nachricht an die E-Mail-Adresse des Notrufenden erfolgen oder aber alternativ mittels einer Facsimile-Nachricht an eine E-Mail-Adresse mit entsprechender Konvertierung erfolgen.

Erfindungsgemäß bevorzugt sendet die lokal zuständige Notrufabfragestelle der Mehrzahl von Notrufabfragestellen 41, 42, 43, 44 bei einem Empfang der notrufabfragestellenspezifischen Textnachricht geeignete Antwortsignale - insbesondere mittels des Doppelton-Mehrfrequenz Verfahrens (DTMF - Dual-Tone Multi-Frequency) - an die Umwandlungseinrichtung 35 des Mobilfunkkommunikationsnetzes 30. Durch die Umwandlungseinrichtung 35 wird das jeweilige Antwortsignal in eine endgerätespezifische Textnachricht (d.h. in einem an das Telekommunikationsendgerät 20 angepassten Format) umgewandelt und diese an das Telekommunikationsendgerät 20 (welches der den Notruf Aussendende nutzt) übertragen. Bevorzugt umfasst die Umwandlungseinrichtung 35 hierzu eine Relationsinformation bezüglich einer Relation zwischen endgerätespezifischen Textnachrichten und zugeordneten Antwortsignalen. Beispielsweise wird durch die Relationsinformation einer endgerätespezifischen Textnachricht "Habe Ihre Nachricht empfangen" das Antwortsignal "*11*#" zugeordnet. Bevorzugt ist unter Relationsinformation eine Liste oder Datenbank zu verstehen. Das bedeutet insbesondere, dass das Antwortsignal in der Umwandlungseinrichtung in die endgerätespezifische Textnachricht umgewandelt, wobei durch die Umwandlungseinrichtung eine Zuordnung von Antwortsignal zu Text vorgenommen wird, wobei durch die Umwandlungseinrichtung die Relationsinformation (beispielsweise die Liste oder Datenbank) verwendet wird.

Alternativ umfasst das Telekommunikationsendgerät 20 die Relationsinformation. Dann wird das Antwortsignal nicht in der Umwandlungseinrichtung umgewandelt, sondern von dieser an das Endgerät übertragen, wobei die Umwandlung des Antwortsignals in die endgerätespezifische Textnachricht im Telekommunikationsendgerät 20 erfolgt.

Erfindungsgemäß bevorzugt wird für die Übertragung der Facsimile-Nachricht eine Kommunikationsverbindung zwischen der lokal zuständigen Notrufabfragestelle der Mehrzahl von Notrufabfragestellen 41, 42, 43, 44 und dem Mobiltelekommunikationsnetz 30 hergestellt, wobei die Kommunikationsverbindung für die Dauer eines Zeitintervalls aufrechterhalten wird, sodass während des Bestehens der Kommunikationsverbindung die das Antwortsignal (durch Verwendung des für den Empfang der Facsimile-Nachricht vorgesehenen Empfangsgeräts) übertragbar ist. Gemäß einer beispielhaften Ausführungsform der vorliegenden Erfindung wird zusätzlich als letzte Seite wenigstens eine Leerseite übermittelt, damit die Kommunikationsverbindung während des (vorbestimmten) Zeitintervalls bestehen bleibt. Gemäß einer beispielhaften alternativen Ausführungsform der vorliegenden Erfindung wird die Kommunikationsverbindung in Abhängigkeit einer Steuerung der Kommunikationsverbindung durch das für den Empfang der Facsimile-Nachricht vorgesehene Empfangsgerät nach Ablauf des (beliebigen) Zeitintervalls beendet.

Das Routing basiert auf der vom Telekommunikationsendgerät 20 ermittelten Funkzelle bzw. auf der vom Telekommunikationsendgerät 20 ermittelten Standortinformation. Hierbei kann die nationale (oder regionale) Regulierungsbehörde auch bereits eine Auswahl treffen, beispielsweise dass netzbasierte Standortinformationen verlangt werden, wie dies beispielsweise in Deutschland der Fall ist. Um diesem Mangel abzuhelfen, kann der Notrufträger auf Basis der angegebenen Rufnummer die aktuelle Funkzelle via LBS ermitteln und somit die Angaben des Notrufenden verifizieren. Alternativ oder ergänzend sollten mit Blick auf die Erhöhung der Manipulationssicherheit Vorkehrungen getroffen werden (insbesondere im Telekommunikationsendgerät 20 und/oder in der Anwendung bzw. der Applikation zur Bestimmung des Ortes des Telekommunikationsendgeräts 20), damit die aktuelle Funkzelle, die dem Telekommunikationsendgerät 20 vorliegt, bzw. die von der Anwendung bzw. Applikation genutzte Funkzelle der tatsächlichen Funkzelle entsprechen.

## Patentansprüche

1. Verfahren zur Übertragung einer textbasierten Notrufnachricht mittels eines mobilen Telekommunikationsendgeräts (20) und eines Mobilfunkkommunikationsnetzes (30), wobei die textbasierte Notrufnachricht
-- eine E-Mail-Nachricht, oder
-- eine SMS-Nachricht, Short Message Service oder
-- eine MMS-Nachricht, Multimedia Messaging Service, oder
-- eine RCS-Nachricht, Rich Communication Suite,
-- eine Nachricht eines IP-basierten Messaging-Dienstes
ist, wobei wenigstens ein für ein eine Mehrzahl von Teilgebieten (51, 52, 53, 54) umfassendes Gesamtgebiet (50) eingerichteter Notrufdienst (40) eine Mehrzahl von Notrufabfragestellen (41, 42, 43, 44) aufweist, wobei jeweils eine lokal zuständige Notrufabfragestelle (41, 42, 43, 44) der Mehrzahl von Notrufabfragestellen (41, 42, 43, 44) einem bestimmten Teilgebiet (51, 52, 53, 54) der Mehrzahl von Teilgebieten (51, 52, 53, 54) zugeordnet ist, wobei die Notrufnachricht als eine notrufabfragestellenspezifische Textnachricht den Notrufabfragestellen (41, 42, 43, 44) zugeleitet wird, wobei ein jeweils unterschiedliches Kommunikationsprofil jeder der lokal zuständigen Notrufabfragestellen (41, 42, 43, 44) zugeordnet ist, wobei die Notrufnachricht in die notrufabfragestellenspezifische Textnachricht gewandelt wird, nachdem die textbasierte Notrufnachricht vom Telekommunikationsendgerät (20) generiert und an das Mobilfunkkommunikationsnetz (30) oder über das Mobilfunkkommunikationsnetz (30) an eine geeignete Servereinrichtung zur Verarbeitung der textbasierten Notrufnachricht übertragen wurde, wobei im Fall einer zu sendenden Notrufnachricht
-- in einem ersten Verfahrensschritt in Abhängigkeit der momentanen räumlichen Zuordnung des Telekommunikationsendgeräts (20) zu einem Teilgebiet (51, 52, 53, 54) der Mehrzahl von Teilgebieten (51, 52, 53, 54) die lokal zuständige Notrufabfragestelle (41, 42, 43, 44) der Mehrzahl von Notrufabfragestellen (41, 42, 43, 44) ermittelt wird,
-- in einem dem ersten Verfahrensschritt nachfolgenden zweiten Verfahrensschritt das Kommunikationsprofil der im ersten Verfahrensschritt ermittelten lokal zuständigen Notrufabfragestelle (41, 42, 43, 44) der Mehrzahl von Notrufabfragestellen (41, 42, 43, 44) ermittelt wird und
-- in einem dem zweiten Verfahrensschritt nachfolgenden dritten Verfahrensschritt die zu sendende Notrufnachricht als notrufabfragestellenspezifische Textnachricht an die lokal zuständige Notrufabfragestelle (41, 42, 43, 44) der Mehrzahl von Notrufabfragestellen (41, 42, 43, 44) unter Verwendung des im zweiten Verfahrensschritt ermittelten Kommunikationsprofils der lokal zuständigen Notrufabfragestelle (41, 42, 43, 44) übertragen wird, oder
-- in einem dem zweiten Verfahrensschritt nachfolgenden alternativen dritten Verfahrensschritt die zu sendende Notrufnachricht als notrufabfragestellenspezifische Textnachricht an ein der lokal zuständigen Notrufabfragestelle (41, 42, 43, 44) der Mehrzahl von Notrufabfragestellen (41, 42, 43, 44) zugeordnetes elektronisches Postfach unter Verwendung des im zweiten Verfahrensschritt ermittelten Kommunikationsprofils der lokal zuständigen Notrufabfragestelle (41, 42, 43, 44) übertragen wird.

2. Verfahren nach einem der vorhergehenden Ansprüche, **dadurch gekennzeichnet, dass** die Servereinrichtung das elektronische Postfach und eine Webschnittstelle umfasst, wobei in dem alternativen dritten Verfahrensschritt
-- eine Push-Nachricht an die Notrufabfragestelle (41, 42, 43, 44) gesendet wird, wenn die notrufabfragestellenspezifischen Textnachricht an das elektronische Postfach übertragen wird, und/oder
-- durch die Notrufabfragestelle (41, 42, 43, 44) die Textnachricht aus dem elektronischen Postfach abgerufen und/oder auf das elektronische Postfach über die Webschnittstelle oder eine andere IP-basierte Zugriffsmöglichkeit zugegriffen wird.

3. Verfahren nach einem der vorhergehenden Ansprüche, **dadurch gekennzeichnet, dass** durch die lokal zuständige Notrufabfragestelle der Mehrzahl von Notrufabfragestellen (41, 42, 43, 44) in Abhängigkeit eines Empfangs der notrufabfragestellenspezifischen Textnachricht geeignete Antwortsignale, insbesondere unter Verwendung des Doppelton-Mehrfrequenz Verfahrens (DTMF - Dual-Tone Multi-Frequency), an die Umwandlungseinrichtung (35) des Mobilfunkkommunikationsnetzes (30) gesendet wird, wobei insbesondere
-- durch die Umwandlungseinrichtung (35) das jeweilige Antwortsignal in eine endgerätespezifische Textnachricht umgewandelt und diese an das Telekommunikationsendgerät (20) übertragen wird, oder
-- das jeweilige Antwortsignal an das Telekommunikationsendgerät (20) übertragen wird und durch das Telekommunikationsendgerät (20) in die endgerätespezifische Textnachricht umgewandelt wird.

4. Verfahren nach einem der vorhergehenden Ansprüche, **dadurch gekennzeichnet, dass** zur Ermittlung des Kommunikationsprofils, insbesondere der Facsimile-Rufnummer, der lokal zuständigen Notrufabfragestelle (41, 42, 43, 44) in einer Speichereinrichtung (21) des Telekommunikationsendgeräts (20) und/oder in einer vom Telekommunikationsendgerät (20) abfragbaren weiteren Speichereinrichtung (22) gespeicherte Kommunikationsprofilsinformationen, insbesondere Rufnummerninformationen, verwendet werden.

5. Verfahren nach einem der vorhergehenden Ansprüche, **dadurch gekennzeichnet, dass** zur Ermittlung der lokal zuständigen Notrufabfragestelle (41, 42, 43, 44) eine oder eine Mehrzahl der nachfolgenden Informationen genutzt wird:
-- eine Identitätsinformation bezüglich der momentan vom Telekommunikationsendgerät (20) genutzten Funkzelle des Mobilfunkkommunikationsnetzes (30),
-- Ortungsinformationen eines Satellitennavigationssystems bezüglich des Telekommunikationsendgeräts (20), für den Fall, dass das Telekommunikationsendgerät (20) einen Empfänger zum Empfang von Signalen des Satellitennavigationssystems umfasst.

6. Verfahren nach einem der vorhergehenden Ansprüche, **dadurch gekennzeichnet, dass** zur Ermittlung des Kommunikationsprofils, insbesondere der Facsimile-Rufnummer, der lokal zuständigen Notrufabfragestelle (41, 42, 43, 44)
-- in einer Datenbankeinrichtung (33) des Mobilfunkkommunikationsnetz (30) oder des Nachrichtendienstes gespeicherte Kommunikationsprofilinformationen, insbesondere Rufnummerninformationen, und/oder
-- in einer weiteren Datenbankeinrichtung (45) des Notrufdienstes (40) gespeicherte Kommunikationsprofilinformationen, insbesondere Rufnummerninformationen, verwendet werden.

7. Verfahren nach einem der vorhergehenden Ansprüche, **dadurch gekennzeichnet, dass** die Adressierung der Notrufnachricht für das Gesamtgebiet (50) für einen einzelnen Notrufdienst (40) nachrichtendienstspezifisch und/oder notrufdienstspezifisch einheitlich ist.

8. Verfahren nach einem der vorhergehenden Ansprüche, **dadurch gekennzeichnet, dass** die Notrufnachricht das Kommunikationsprofil, insbesondere die Facsimile-Rufnummer, der lokal zuständigen Notrufabfragestelle (41, 42, 43, 44) aufweist oder das Kommunikationsprofil, insbesondere die Facsimile-Rufnummer, an die Notrufnachricht angefügt wird oder das Kommunikationsprofil, insbesondere die Facsimile-Rufnummer, mit der Notrufnachricht mitübertragen wird.

9. Verfahren nach einem der vorhergehenden Ansprüche, **dadurch gekennzeichnet, dass** die Notrufnachricht wenigstens eine der nachfolgenden Informationen umfasst oder wenigstens eine der nachfolgenden Informationen mit der Notrufnachricht mitübertragen wird/werden:
-- die Rufnummer, die der den Notruf Aussendende nutzt,
-- eine Identitätsinformation bezüglich der momentan vom Telekommunikationsendgerät (20) genutzten Funkzelle des Mobilfunkkommunikationsnetzes (30),
-- Ortungsinformationen eines Satellitennavigationssystems bezüglich des Telekommunikationsendgeräts (20), für den Fall, dass das Telekommunikationsendgerät (20) einen Empfänger zum Empfang von Signalen des Satellitennavigationssystems umfasst,
-- sensorermittelte Daten eines Sensors, insbesondere eines Aspekte des Gesundheitszustandes überwachenden oder messenden Sensors, insbesondere eines Blutdrucksensors und/oder eines Pulssensors und/oder eines Blutzuckersensors, der entweder mit dem Telekommunikationsendgerät (20) über eine Datenübertragungsverbindung verbunden ist oder den das Telekommunikationsendgerät (20) umfasst,
-- eine Freitextinformation, insbesondere zur Übertragung einer Information über die persönliche Situation und/oder die Erreichbarkeit des die Notrufnachricht Sendenden und/oder über die Natur der Notrufnachricht als Feuerwehrnotrufnachricht oder als Polizeinotrufnachricht.

10. Verfahren nach einem der vorhergehenden Ansprüche, **dadurch gekennzeichnet, dass** neben dem Notrufdienst (40) ein eine Mehrzahl von weiteren Teilgebieten umfassendes weiteres Gesamtgebiet eingerichteter weiterer Notrufdienst vorgesehen ist, wobei der weitere Notrufdienst eine Mehrzahl von weiteren Notrufabfragestellen aufweist, wobei jeweils eine lokal zuständige weitere Notrufabfragestelle der Mehrzahl von weiteren Notrufabfragestellen einem bestimmten weiteren Teilgebiet der Mehrzahl von weiteren Teilgebieten zugeordnet ist, wobei eine weitere Notrufnachricht als eine weitere notrufabfragestellenspezifische Textnachricht, insbesondere Facsimile-Nachricht, den weiteren Notrufabfragestellen zugeleitet wird, wobei ein jeweils unterschiedliches Kommunikationsprofil, insbesondere eine Facsimile-Telefonnummer, jeder der lokal zuständigen weiteren Notrufabfragestellen zugeordnet ist.

11. Verfahren nach einem der vorhergehenden Ansprüche, **dadurch gekennzeichnet, dass** der für das Gesamtgebiet (50) eingerichtete Notrufdienst (40) ein national oder international eingerichteter Notrufdienst (40) ist, wobei das Gesamtgebiet (50) das Staatsgebiet eines Nationalstaats oder einer Mehrzahl von Nationalstaaten umfasst.

12. System (10) zur Übertragung einer textbasierten Notrufnachricht, wobei das System (10) ein mobiles Telekommunikationsendgerät (20) und ein Mobilfunkkommunikationsnetz (30) umfasst,
wobei die textbasierte Notrufnachricht
-- eine E-Mail-Nachricht, oder
-- eine SMS-Nachricht, Short Message Service, oder
-- eine MMS-Nachricht, Multimedia Messaging Service, oder
-- eine RCS-Nachricht, Rich Communication Suite,
-- eine Nachricht eines IP-basierten Messaging-Dienstes
ist, wobei ein für ein eine Mehrzahl von Teilgebieten (51, 52, 53, 54) umfassendes Gesamtgebiet (50) eingerichteter Notrufdienst (40) eine Mehrzahl von Notrufabfragestellen (41, 42, 43, 44) aufweist, wobei jeweils eine lokal zuständige Notrufabfragestelle (41, 42, 43, 44) der Mehrzahl von Notrufabfragestellen (41, 42, 43, 44) einem bestimmten Teilgebiet (51, 52, 53, 54) der Mehrzahl von Teilgebieten (51, 52, 53, 54) zugeordnet ist, wobei das System derart konfiguriert ist, dass die Notrufnachricht als eine notrufabfragestellenspezifische Textnachricht den Notrufabfragestellen (41, 42, 43, 44) zugeleitet wird, wobei ein jeweils unterschiedliches Kommunikationsprofil jeder der lokal zuständigen Notrufabfragestellen (41, 42, 43, 44) zugeordnet ist, wobei das System (10) ferner derart konfiguriert ist, dass die Notrufnachricht in die notrufabfragestellenspezifische Textnachricht gewandelt wird, nachdem die textbasierte Notrufnachricht vom Telekommunikationsendgerät (20) generiert und an das Mobilfunkkommunikationsnetz (30) oder über das Mobilfunkkommunikationsnetz (30) an eine geeignete Servereinrichtung zur Verarbeitung der textbasierten Notrufnachricht übertragen wurde, wobei das System (10) ferner derart konfiguriert ist, dass im Fall einer zu sendenden Notrufnachricht
-- in Abhängigkeit der momentanen räumlichen Zuordnung des Telekommunikationsendgeräts (20) zu einem Teilgebiet (51, 52, 53, 54) der Mehrzahl von Teilgebieten (51, 52, 53, 54) die lokal zuständige Notrufabfragestelle (41, 42, 43, 44) der Mehrzahl von Notrufabfragestellen (41, 42, 43, 44) ermittelt wird,
-- das zugeordnete Kommunikationsprofil der ermittelten lokal zuständigen Notrufabfragestelle (41, 42, 43, 44) der Mehrzahl von Notrufabfragestellen (41, 42, 43, 44) ermittelt wird und
-- die zu sendende Notrufnachricht als notrufabfragestellenspezifische Textnachricht
-- an die lokal zuständige Notrufabfragestelle (41, 42, 43, 44) der Mehrzahl von Notrufabfragestellen (41, 42, 43, 44) oder
-- an ein der lokal zuständigen Notrufabfragestelle (41, 42, 43, 44) der Mehrzahl von Notrufabfragestellen (41, 42, 43, 44) zugeordnetes elektronisches Postfach
unter Verwendung der ermittelten Facsimile-Rufnummer der lokal zuständigen Notrufabfragestelle (41, 42, 43, 44) übertragen wird.

13. System (10) nach Anspruch 12, **dadurch gekennzeichnet, dass** das System (10) eine Umwandlungseinrichtung (35) aufweist, wobei die Umwandlungseinrichtung (35) derart konfiguriert ist, dass die Notrufnachricht in eine notrufabfragestellenspezifische Textnachricht, insbesondere Facsimile-Nachricht, gewandelt wird, nachdem die textbasierte Notrufnachricht vom Telekommunikationsendgerät (20) generiert und an das Mobilfunkkommunikationsnetz (30) oder über das Mobilfunkkommunikationsnetz (30) zu einem geeigneten Server des jeweiligen Nachrichtendienstes übertragen wurde.

14. Computerprogramm mit Programmcodemitteln, mit deren Hilfe alle Schritte eines Verfahrens nach einem der Ansprüche 1 bis 11 durchgeführt werden, wenn das Computerprogramm auf einer programmierbaren Einrichtung und/oder einem programmierbaren Telekommunikationsendgerät (20) und/oder einer Umwandlungseinrichtung (35), insbesondere in Teilen auf einem programmierbaren Telekommunikationsendgerät (20) und in Teilen auf einer Umwandlungseinrichtung (35), ausgeführt wird.

15. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 11 durchgeführt werden, wenn das Computerprogramm auf einer programmierbaren Einrichtung und/oder einem programmierbaren Telekommunikationsendgerät (20) und/oder einer Umwandlungseinrichtung (35), insbesondere in Teilen auf einem programmierbaren Telekommunikationsendgerät (40) und in Teilen auf einer Umwandlungseinrichtung (35), ausgeführt wird.

## Claims

1. Method for transmitting a text-based emergency message using a mobile telecommunications terminal device (20) and a mobile communications network (30), the text-based emergency message being
- an e-mail message or
- an SMS, short message service, message or
- an MMS, multimedia messaging service, message or
- an RCS, rich communication suite, message or
- a message of an IP-based messaging service,
at least one emergency call service (40) set up for an overall region (50) comprising a plurality of sub-regions (51, 52, 53, 54) comprising a plurality of emergency call inquiry terminals (41, 42, 43, 44), each locally responsible emergency call inquiry terminal (41, 42, 43, 44) of the plurality of emergency call inquiry terminals (41, 42, 43, 44) being assigned to a particular sub-region (51, 52, 53, 54) of the plurality of sub-regions (51, 52, 53, 54), the emergency message being supplied to the emergency call inquiry call inquiry terminals (41, 42, 43, 44) as a text message specific to an emergency call inquiry terminal, a different communication profile being assigned to each of the locally responsible emergency call inquiry terminals (41, 42, 43, 44), the emergency message being converted into the text message specific to an emergency call inquiry terminal once the text-based emergency message has been generated by the telecommunications terminal device (20) and transmitted to the mobile communications network (30) or via the mobile communications network (30) to a suitable server means for processing the text-based emergency message, wherein, in the case of an emergency message to be sent,
- in a first method step, as a function of the current physical allocation of the telecommunications terminal device (20) to a sub-region (51, 52, 53, 54) of the plurality of sub-regions (51, 52, 53, 54), the locally responsible emergency call inquiry terminal (41, 42, 43, 44) of the plurality of emergency call inquiry terminals (41, 42, 43, 44) is determined,
- in a second method step following the first method step, the communication profile of the locally responsible emergency call inquiry terminal (41, 42, 43, 44) determined in the first method step of the plurality of emergency call inquiry terminals (41, 42, 43, 44) is determined, and,
- in a third method step following the second method step, the emergency message to be sent is transmitted to the locally responsible emergency call inquiry terminal (41, 42, 43, 44) of the plurality of emergency call inquiry terminals (41, 42, 43, 44) as a text message specific to the emergency call inquiry terminal using the communication profile determined in the second step of the locally responsible emergency call inquiry terminal (41, 42, 43, 44), or,
- in an alternative third method step following the second method step, the emergency message to be sent is transmitted to an electronic mailbox allocated to the locally responsible emergency call inquiry terminal (41, 42, 43, 44) of the plurality of emergency call inquiry terminals (41, 42, 43, 44) as a text message specific to the emergency call inquiry terminal using the communication profile determined in the second step of the locally responsible emergency call inquiry terminal (41, 42, 43, 44).

2. Method according to any of the preceding claims, **characterised in that** the server means comprises the electronic mailbox and a Web interface, and in the alternative third method step
- a push message is sent to the emergency call inquiry terminal (41, 42, 43, 44) when the text message specific to an emergency call inquiry terminal is transmitted to the electronic mailbox, and/or
- the text message is fetched from the electronic mailbox by the emergency call inquiry terminal (41, 42, 43, 44) and/or the electronic mailbox is accessed via the Web interface or another IP-based access option.

3. Method according to any of the preceding claims, **characterised in that** the locally responsible emergency call inquiry terminal of the plurality of emergency call inquiry terminals (41, 42, 43, 44) sends suitable response signals to the conversion means (35) of the mobile communications network (30) as a function of receipt of the text message specific to the emergency call inquiry terminal, in particular using the dual-tone multi-frequency (DTMF) method, and in particular
- the conversion means (35) converts the relevant response signal into a terminal-device-specific text message and transmits this to the telecommunications terminal device (20), or
- the relevant response signal is transmitted to the telecommunications terminal device (20) and converted by the telecommunications terminal device (20) into the terminal-device-specific text message.

4. Method according to any of the preceding claims, **characterised in that** to determine the communication profile, in particular the facsimile calling number, of the locally responsible emergency call inquiry terminal (41, 42, 43, 44), communication profile information, in particular calling number information, stored in a storage means (21) of the telecommunications terminal device (20) and/or in a further storage means (22) queryable by the telecommunications terminal device (20) is used.

5. Method according to any of the preceding claims, **characterised in that** to determine the locally responsible emergency call inquiry terminal (41, 42, 43, 44) one or more of the following pieces of information are used:
- a piece of identity information for the communications cell of the mobile communications network (30) currently being used by the telecommunications terminal device (20),
- positioning information of a satellite navigation system for the telecommunications terminal device (20), if the telecommunications terminal device (20) comprises a receiver for receiving signals of the satellite navigation system.

6. Method according to any of the preceding claims, **characterised in that**, to determine the communication profile, in particular the facsimile calling number, of the locally responsible emergency call inquiry terminal (41, 42, 43, 44),
- communication profile information, in particular calling number information, stored in a database means (33) of the mobile communications network (30) or of the message service, and/or
- communication profile information, in particular calling number information, stored in a further database means (45) of the emergency call service (40)
is used.

7. Method according to any of the preceding claims, **characterised in that** for an individual emergency call service (40) the addressing of the emergency message is standardised for the entire region (50) in a manner specific to the message service and/or to the emergency call service.

8. Method according to any of the preceding claims, characterised n that the emergency message comprises the communication profile, in particular the facsimile calling number, of the locally responsible emergency call inquiry terminal (41, 42, 43, 44), or the communication profile, in particular the facsimile calling number, is attached to the emergency message, or the communication profile, in particular the facsimile calling number, is transmitted together with the emergency message.

9. Method according to any of the preceding claims, **characterised in that** the emergency message comprises at least one of the following pieces of information, or at least one of the following pieces of information is transmitted together with the emergency message:
- the calling number used by the sender of the emergency message,
- a piece of identity information for the communications cell of the mobile communications network (30) currently being used by the telecommunications terminal device (20),
- positioning information of a satellite navigation system for the telecommunications terminal device (20), if the telecommunications terminal device (20) comprises a receiver for receiving signals of the satellite navigation system,
- sensor-detected data of a sensor, in particular a sensor which monitors or measures aspects of the state of health, in particular a blood pressure sensor and/or a pulse sensor and/or a blood sugar sensor, which is either connected to the telecommunications terminal device (20) via a data transmission connection or comprised by the telecommunications terminal device (20),
- a piece of information in free text, in particular for transmitting information about the personal situation and/or the reachability of the emergency message sender and/or the nature of the emergency message as an emergency fire brigade message or an emergency police message.

10. Method according to any of the preceding claims, **characterised in that**, as well as the emergency call service (40), a further emergency call service set up for a further overall region comprising a plurality of further sub-regions is provided, the further emergency call service comprising a plurality of further emergency call inquiry terminals, a locally responsible further emergency call inquiry terminal of the plurality of further emergency call inquiry terminals being allocated to a particular further sub-region of the plurality of further sub-regions, a further emergency message being supplied to the further emergency call inquiry terminals as a further text message, in particular facsimile message, specific to an emergency call inquiry terminal, a different communication profile, in particular facsimile number, being allocated to each of the locally responsible further emergency call inquiry terminals.

11. Method according to any of the preceding claims, **characterised in that** the emergency call service set up for the overall region (50) is an emergency call service (40) set up nationally or internationally, the overall region (50) comprising the national territory of a nation state or of a plurality of nation states.

12. System (10) for transmitting a text-based emergency message, the system (10) comprising a telecommunications terminal device (20) and a mobile communications network (30), the text-based emergency message being
- an e-mail message or
- an SMS, short message service, message or
- an MMS, multimedia messaging service, message or
- an RCS, rich communication suite, message or
- a message of an IP-based messaging service,
at least one emergency call service (40) set up for an overall region (50) comprising a plurality of sub-regions (51, 52, 53, 54) comprising a plurality of emergency call inquiry terminals (41, 42, 43, 44), each locally responsible emergency call inquiry terminal (41, 42, 43, 44) of the plurality of emergency call inquiry terminals (41, 42, 43, 44) being assigned to a particular sub-region (51, 52, 53, 54) of the plurality of sub-regions (51, 52, 53, 54), the system being configured in such a way that the emergency message is supplied to the emergency call inquiry call inquiry terminals (41, 42, 43, 44) as a text message specific to an emergency call inquiry terminal, a different communication profile being assigned to each of the locally responsible emergency call inquiry terminals (41, 42, 43, 44), the system (10) further being configured in such a way that the emergency message is converted into the text message specific to an emergency call inquiry terminal once the text-based emergency message has been generated by the telecommunications terminal device (20) and transmitted to the mobile communications network (30) or via the mobile communications network (30) to a suitable server means for processing the text-based emergency message, wherein the system (10) is further configured in such a way that, in the case of an emergency message to be sent, as a function of the current physical allocation of the telecommunications terminal device (20) to a sub-region (51, 52, 53, 54) of the plurality of sub-regions (51, 52, 53, 54), the locally responsible emergency call inquiry terminal (41, 42, 43, 44) of the plurality of emergency call inquiry terminals (41, 42, 43, 44) is determined,
- the communication profile of the determined locally responsible emergency call inquiry terminal (41, 42, 43, 44) of the plurality of emergency call inquiry terminals (41, 42, 43, 44) is determined, and,
- the emergency message to be sent is transmitted
- to the locally responsible emergency call inquiry terminal (41, 42, 43, 44) of the plurality of emergency call inquiry terminals (41, 42, 43, 44) or
- to an electronic mailbox allocated to the locally responsible emergency call inquiry terminal (41, 42, 43, 44) of the plurality of emergency call inquiry terminals (41, 42, 43, 44),
using the determined facsimile calling number of the locally responsible emergency call inquiry terminal (41, 42, 43, 44).

13. System (10) according to claim 12, **characterised in that** the system (10) comprises a conversion means (35), the conversion means (35) being configured in such a way that the emergency message is converted into a text message, in particular facsimile message, specific to an emergency call inquiry terminal once the text-based emergency message has been generated by the telecommunications terminal device (20) and transmitted to the mobile communications network (30) or via the mobile communications network (30) to a suitable server of the relevant message service.

14. Computer program comprising program code means by way of which all steps of a method according to any of claims 1 to 11 are carried out when the computer program is run on a programmable means and/or a programmable telecommunications terminal device (20) and/or a conversion means (35), in particular in parts on a programmable telecommunications terminal device (20) and in parts on a conversion means (35).

15. Computer program product comprising a computer-readable medium and a computer program stored on the computer-readable medium and comprising program code means suitable for all steps of a method according to any of claims 1 to 11 to be carried out when the computer program is run on a programmable means and/or a programmable telecommunications terminal device (20) and/or a conversion means (35), in particular in parts on a programmable telecommunications terminal device (40) and in parts on a conversion means (35).

## Revendications

1. Procédé pour transmettre un message d'appel d'urgence textuel à l'aide d'un terminal de communication mobile (20) et d'un réseau de communication mobile (30), le message d'appel d'urgence textuel étant
- un message e-mail, ou
- un message SMS, Short Message Service, ou
- un message MMS, Multimedia Messaging Service, ou
- un message RCS, Rich Communication Suite, ou
- un message d'un service de messagerie basé sur IP, dans lequel au moins un service d'appels d'urgence (40) agencé pour un territoire global (50) comprenant une pluralité de territoires partiels (51, 52, 53, 54) présente une pluralité de points d'interrogation d'appel d'urgence (41, 42, 43, 44), chaque point d'interrogation d'appel d'urgence (41, 42, 43, 44) compétent localement parmi la pluralité de points d'interrogation d'appel d'urgence (41, 42, 43, 44) étant associé à un territoire partiel définie (51, 52, 53, 54) parmi la pluralité de territoires partiels (51, 52, 53, 54), le message d'appel d'urgence étant transmis aux points d'interrogation d'appel d'urgence (41, 42, 43, 44) sous la forme d'un message texte spécifique aux points d'interrogation d'appel d'urgence, chaque profil de communication différent étant associé à chacun des points d'interrogation d'appel d'urgence (41, 42, 43, 44) compétents localement, le message d'appel d'urgence étant converti en message texte spécifique aux points d'interrogation d'appel d'urgence après que le message d'appel d'urgence textuel ait été généré par le terminal de communication (20) et transmis au réseau de radiocommunication mobile (30) ou par le biais du réseau de radiocommunication mobile (30) à un moyen de serveur approprié pour traiter le message d'appel d'urgence textuel, dans lequel, dans le cas d'un message d'appel d'urgence à émettre
- on détermine, dans une première étape de procédé, en fonction de l'association spatiale momentanée du terminal de communication (20) à un territoire partiel (51, 52, 53, 54) parmi la pluralité de territoires partiels (51, 52, 53, 54), le point d'interrogation d'appel d'urgence compétent localement (41, 42, 43, 44) parmi la pluralité de points d'interrogation d'appel d'urgence (41, 42, 43, 44),
- on détermine, dans une deuxième étape de procédé suivant la première étape de procédé, le profil de communication du point d'interrogation d'appel d'urgence compétent localement (41, 42, 43, 44) parmi la pluralité de points d'interrogation d'appel d'urgence (41, 42, 43, 44) qui a été déterminé dans la première étape de procédé, et
- on transmet, dans une troisième étape de procédé suivant la deuxième étape de procédé, le message d'appel d'urgence à émettre, sous la forme de message texte spécifique aux points d'interrogation d'appel d'urgence, vers le point d'interrogation d'appel d'urgence compétent localement (41, 42, 43, 44) parmi la pluralité de points d'interrogation d'appel d'urgence (41, 42, 43, 44) en utilisant le profil de communication du point d'interrogation d'appel d'urgence compétent localement (41, 42, 43, 44) qui a été déterminé dans la deuxième étape de procédé, ou
- on transmet, dans une troisième étape de procédé alternative suivant la deuxième étape de procédé, le message d'appel d'urgence à émettre, sous la forme de message texte spécifique aux points d'interrogation d'appel d'urgence, à une boîte aux lettres électronique associée au point d'interrogation d'appel d'urgence compétent localement (41, 42, 43, 44) parmi la pluralité de points d'interrogation d'appel d'urgence (41, 42, 43, 44), en utilisant le profil de communication du point d'interrogation d'appel d'urgence compétent localement (41, 42, 43, 44) qui a été déterminé dans la deuxième étape de procédé.

2. Procédé selon une des revendications précédentes, **caractérisé en ce que** le moyen de serveur comprend la boîte aux lettres électronique et une interface Web, dans lequel, dans la troisième étape de procédé alternative,
- on émet un message Push au point d'interrogation d'appel d'urgence (41, 42, 43, 44), lorsque le message texte spécifique aux points d'interrogation d'appel d'urgence est transmis à la boîte aux lettres électronique, et/ou
- on appelle le message texte de la boîte aux lettres électronique par le biais du point d'interrogation d'appel d'urgence (41, 42, 43, 44) et/ou on accède à la boîte aux lettres électronique par le biais de l'interface Web ou d'une autre possibilité d'accès basée sur IP.

3. Procédé selon une des revendications précédentes, **caractérisé en ce qu'**on émet, par le biais du point d'interrogation d'appel d'urgence compétent localement parmi la pluralité de points d'interrogation d'appel d'urgence (41, 42, 43, 44), en fonction d'une réception de signaux de réponse appropriés au message texte spécifique aux points d'interrogation d'appel d'urgence, en particulier en utilisant la méthode de la multifréquence à deux tonalités (DTMF - Dual-Tone Multi-Frequency), vers le moyen de conversion (35) du réseau de communication mobile (30), dans lequel en particulier
- on convertit, par le biais du moyen de conversion (35), le signal de réponse respectif en un message texte spécifique au terminal et on le transmet au terminal de communication (20), ou
- on transmet le signal de réponse respectif au terminal de communication (20) et on le convertit, par le biais du terminal de communication (20), en message texte spécifique au terminal.

4. Procédé selon une des revendications précédentes, **caractérisé en ce que**, pour déterminer le profil de communication, en particulier le numéro d'appel facsimilé, du point d'interrogation d'appel d'urgence compétent localement (41, 42, 43, 44), on utilise des informations de profil de communication, en particulier des informations de numéro d'appel, mémorisées dans un moyen de mémoire (21) du terminal de communication (20) et/ou dans un autre moyen de mémoire (22) qui peut être interrogé par le terminal de communication (20).

5. Procédé selon une des revendications précédentes, **caractérisé en ce que**, pour déterminer le point d'interrogation d'appel d'urgence compétent localement (41, 42, 43, 44), on utilise une ou plusieurs des informations suivantes :
- une information d'identité relative à la cellule radio du réseau de communication mobile (30) qui est utilisée momentanément par le terminal de communication (20),
- des informations de localisation d'un système de navigation par satellite relatives au terminal de communication (20), dans le cas où le terminal de communication (20) comprend un récepteur pour recevoir des signaux du système de navigation par satellite.

6. Procédé selon une des revendications précédentes, **caractérisé en ce que**, pour déterminer le profil de communication, en particulier le numéro d'appel facsimilé, du point d'interrogation d'appel d'urgence compétent localement (41, 42, 43, 44), on utilise
- des informations de profil de communication, en particulier des informations de numéro d'appel, mémorisées dans un moyen de base de données (33) du réseau de radiocommunication mobile (30) ou du service de messagerie, et/ou
- des informations de profil de communication, en particulier des informations de numéro d'appel, mémorisées dans un autre moyen de base de données (45) du service d'appels d'urgence (40).

7. Procédé selon une des revendications précédentes, **caractérisé en ce que** l'adressage du message d'appel d'urgence pour le territoire global (50) est unique pour un service d'appels d'urgence individuel (40) de manière spécifique au service de messagerie et/ou spécifique au service d'appels d'urgence.

8. Procédé selon une des revendications précédentes, **caractérisé en ce que** le message d'appel d'urgence présente le profil de communication, en particulier le numéro d'appel fac-similé, du point d'interrogation d'appel d'urgence compétent localement (41, 42, 43, 44) ou le profil de communication, en particulier le numéro d'appel fac-similé, est ajouté au message d'appel d'urgence ou le profil de communication, en particulier le numéro d'appel fac-similé, est transmis avec le message d'appel d'urgence.

9. Procédé selon une des revendications précédentes, **caractérisé en ce que** le message d'appel d'urgence comprend au moins une des informations suivantes ou au moins une des informations suivantes est transmise avec le message d'appel d'urgence :
- le numéro d'appel utilisé par l'émetteur de l'appel d'urgence,
- une information d'identité relative à la cellule radio du réseau de communication mobile (30) qui est utilisée momentanément par le terminal de communication (20),
- des informations de localisation d'un système de navigation par satellite relatives au terminal de communication (20), dans le cas où le terminal de communication (20) comprend un récepteur pour recevoir des signaux du système de navigation par satellite,
- des données d'un capteur, en particulier d'un capteur qui surveille ou mesure des aspects de l'état de santé, qui sont déterminées par capteur, en particulier d'un capteur de pression artérielle et/ou d'un capteur d'impulsions et/ou d'un capteur de glycémie, qui est soit relié au terminal de communication (20) par le biais d'une liaison de transmission de données, soit qui comprend le terminal de communication (20),
- une information de texte libre, en particulier pour transmettre une information relative à la situation personnelle et/ou l'accessibilité de l'émetteur du message d'appel d'urgence et/ou à la nature du message d'appel d'urgence sous la forme d'un message d'appel d'urgence des sapeurs-pompiers ou d'un message d'appel d'urgence de la police.

10. Procédé selon une des revendications précédentes, **caractérisé en ce que**, outre le service d'appels d'urgence (40), il est prévu un autre service d'appels d'urgence agencé dans un autre territoire global comprenant une pluralité d'autres territoires partiels, l'autre service d'appels d'urgence présentant une pluralité d'autres points d'interrogation d'appel d'urgence, chaque autre point d'interrogation d'appel d'urgence compétent localement parmi la pluralité d'autres points d'interrogation d'appel d'urgence étant associé à une autre territoire partiel défini parmi la pluralité d'autres territoires partiels, un autre message d'appel d'urgence étant transmis, sous la forme d'un autre message texte spécifique aux points d'interrogation d'appel d'urgence, en particulier un message fac-similé, aux autres points d'interrogation d'appel d'urgence, chaque profil de communication différent, en particulier un numéro de téléphone fac-similé, étant associé à chacun des autres points d'interrogation d'appel d'urgence compétents localement.

11. Procédé selon une des revendications précédentes, **caractérisé en ce que** le service d'appels d'urgence (40) agencé pour le territoire global (50) est un service d'appels d'urgence (40) agencé nationalement ou internationalement, le territoire global (50) comprenant le territoire national d'un État national ou d'une pluralité d'États nationaux.

12. Système (10) pour transmettre un message d'appel d'urgence textuel, le système (10) comportant un terminal de communication mobile (20) et un réseau de radiocommunication mobile (30), le message d'appel d'urgence textuel étant
- un message e-mail, ou
- un message SMS, Short Message Service, ou
- un message MMS, Multimedia Messaging Service, ou
- un message RCS, Rich Communication Suite, ou
- un message d'un service de messagerie basé sur IP, dans lequel un service d'appels d'urgence (40) agencé pour un territoire global (50) comprenant une pluralité de territoires partiels (51, 52, 53, 54) présente une pluralité de points d'interrogation d'appel d'urgence (41, 42, 43, 44), chaque point d'interrogation d'appel d'urgence (41, 42, 43, 44) compétent localement parmi la pluralité de points d'interrogation d'appel d'urgence (41, 42, 43, 44) étant associé à un territoire partiel défini (51, 52, 53, 54) parmi la pluralité de territoires partiels (51, 52, 53, 54), le système étant configuré de telle sorte que le message d'appel d' urgence est transmis aux points d'interrogation d'appel d'urgence (41, 42, 43, 44) sous la forme d'un message texte spécifique aux points d'interrogation d'appel d'urgence, chaque profil de communication différent étant associé à chacun des points d'interrogation d'appel d'urgence (41, 42, 43, 44) compétents localement, le système (10) étant en outre configuré de telle sorte que le message d'appel d'urgence est converti en message texte spécifique aux points d'interrogation d'appel d'urgence, après que le message d'appel d'urgence textuel ait été généré par le terminal de communication (20) et transmis au réseau de radiocommunication mobile (30) ou par le biais du réseau de radiocommunication mobile (30) à un moyen de serveur approprié pour traiter le message d'appel d'urgence textuel, le système (10) étant en outre configuré de telle sorte que, dans le cas d'un message d'appel d'urgence à émettre,
- on détermine, en fonction de l'association spatiale momentanée du terminal de communication (20) à un territoire partiel (51, 52, 53, 54) parmi la pluralité de territoires partiels (51, 52, 53, 54), le point d'interrogation d'appel d'urgence compétent localement (41, 42, 43, 44) parmi la pluralité de points d'interrogation d'appel d'urgence (41, 42, 43, 44),
- on détermine le profil de communication associé du point d'interrogation d'appel d'urgence compétent localement déterminé (41, 42, 43, 44) parmi la pluralité de points d'interrogation d'appel d'urgence (41, 42, 43, 44), et
- on transmet le message d'appel d'urgence à émettre sous la forme de message texte spécifique aux points d'interrogation d'appel d'urgence
- vers le point d'interrogation d'appel d'urgence compétent localement (41, 42, 43, 44) parmi la pluralité de points d'interrogation d'appel d'urgence (41, 42, 43, 44) ou
- vers une boîte à lettres électronique associée au point d'interrogation d'appel d'urgence compétent localement (41, 42, 43, 44) parmi la pluralité de points d'interrogation d'appel d'urgence (41, 42, 43, 44),
en utilisant le numéro d'appel fac-similé déterminé du point d'interrogation d'appel d'urgence compétent localement (41, 42, 43, 44).

13. Système (10) selon la revendication 12, **caractérisé en ce que** le système (10) présente un moyen de conversion (35), le moyen de conversion (35) étant configuré de telle sorte que le message d'appel d'urgence est converti en message texte spécifique aux points d'interrogation d'appel d'urgence, en particulier un message fac-similé, après que le message d'appel d'urgence textuel ait été généré par le terminal de communication (20) et transmis au réseau de radiocommunication mobile (30) ou par le biais du réseau de radiocommunication mobile (30) à un serveur approprié du service de messagerie respectif.

14. Programme d'ordinateur comportant des moyens de codes de programme, qui permettent de mettre en oeuvre toutes les étapes d'un procédé selon une des revendications 1 à 11, lorsque le programme d'ordinateur est exécuté sur un dispositif programmable et/ou un terminal de communication programmable (20) et/ou un moyen de conversion (35), en particulier en parties sur un terminal de communication programmable (20) et en parties sur un moyen de conversion programmable (35).

15. Produit de programme d'ordinateur comportant un support lisible par ordinateur et un programme d'ordinateur mémorisé sur le support lisible par ordinateur, comportant des moyens de codes de programme qui sont appropriés pour exécuter toutes les étapes d'un procédé selon une des revendications 1 à 11, lorsque le programme d'ordinateur est exécuté sur un dispositif programmable et/ou un terminal de communication programmable (20) et/ou un moyen de conversion (35), en particulier en parties sur un terminal de communication programmable (40) et en parties sur un moyen de conversion programmable (35).
